# EUROPÄISCHE PATENTSCHRIFT

(11) **EP 1 190 886 B1**
(45) Veröffentlichungstag und Bekanntmachung des Hinweises auf die Patenterteilung: **16.01.2008**
(21) Anmeldenummer: 01120739.6
(22) Anmeldetag: 06.09.2001
(51) Int. Cl.: B60K 37/02

(54) **Informationseinrichtung in einem Kraftfahrzeug**
Information device in motor vehicle
Dispositif d'information dans un véhicule à moteur

(30) Priorität: 21.09.2000 DE 10046908
(43) Veröffentlichungstag der Anmeldung: 27.03.2002
(73) Patentinhaber: MAN Nutzfahrzeuge Aktiengesellschaft, 80995 München (DE)
(72) Erfinder: Spaderna, Josef, Dipl.-Ing., 85229 Markt Indersdorf (DE); Klostermeier, Michael, Dipl.-Ing., 82152 Martinsried (DE); Wehner, Herbert, Dipl.-Ing., 80992 München (DE); Mayer, Markus, Dipl.-Designer, 88255 Baienfurt (DE)

(56) Entgegenhaltungen:
- EP-A- 0 701 926
- WO-A-00/21795
- WO-A-01/17813
- WO-A-97/13657
- WO-A-98/09846
- DE-A- 4 140 864
- DE-A- 4 307 367

## Beschreibung

Die Erfindung betrifft eine Einrichtung in einem Kraftfahrzeug gemäß dem Oberbegriff des Anspruches 1.

Aus der DE 198 04 351 A1 ist eine Einrichtung bekannt, bei der fahrzeugbezogene Daten für verschiedene Funktionen in einem Kraftfahrzeug an einem im Fahrersichtfeld angeordneten Display angezeigt werden. Mit Hilfe eines am Display verstellbaren Cursors, können durch Betätigung eines in Fahrernähe, beispielsweise direkt am Lenkrad, in Form eines Cursorrades angeordneten Bedienstellers die angezeigten Daten bzw. Funktionen ausgewählt werden. Für die verschiedenen Daten bzw. Funktionen sind auf dem Display in Reihen und/oder in Zeilen Symbole und/oder Worte vorgesehen.

Aus der EP 0 742 541 B1 ist ein Informationsdisplay in einem Kraftfahrzeug bekannt, auf dem eine Vielzahl von Symbolen dargestellt ist, denen jeweils eine bestimmte, auf verschiedene Teile des Kraftfahrzeuges bezogene Informationen zugeordnet sind.

Aus der DE 41 40 864 A1 ist eine Vorrichtung für eine multifunktionelle Anzeige von Diagnosesignalen am Armaturenbrett eines Kraftfahrzeuges bekannt, mit welcher fahrzeugbezogene Störsignale gesteuert angezeigt werden können.

Aus der EP 0 884 220 A2 ist eine Vorrichtung zur Anzeige und Steuerung von Funktionen in einem Kraftfahrzeug bekannt, welche mindestens ein Master-Bedienfeld und mindestens ein Slave-Bedienfeld, die miteinander bidirektional verbunden sind, aufweist. Die vorhandenen Funktionen können dargestellt und angesteuert werden.

Des Weiteren zeigt WO 98/09846 A eine Einrichtung in einem Kraftfahrzeug zur Anzeige und Auswahl von Informationsinhalten gemäß dem Oberbegriff des Anspruchs 1.

Der Erfindung liegt die Aufgabe zugrunde, eine in einem primären Blick- und Bedienfeld des Fahrers anordbare Einrichtung für ein Kraftfahrzeug zu schaffen, mittels dieser der Fahrer bei einfachstem Bedienmanagement mit einer einzelnen Hand unterschiedliche fahrzeugrelevante und komfortbezogene Informationsinhalte während einer Fahrzeugfahrt abrufen, auswählen und beeinflussen sowie diverse Geräte innerhalb des Kraftfahrzeuges funktionssicher bedienen kann, ohne dass hierdurch die Verkehrssicherheit beeinträchtigt ist.

Diese Aufgabe wird erfindungsgemäß durch die Merkmale des Anspruches 1 gelöst.

Durch die erfindungsgemäße Einrichtung ist eine in einem primären Blick- und Bedienfeld eines Fahrers eines Kraftfahrzeuges angeordnete Einrichtung gegeben, mittels dieser fahrzeugrelevante und komfortbezogene Informationsinhalte zentral und mit wenigen Bedienschritten aufrufbar, auswählbar und beeinflussbar sind, wodurch bedarfsweise als zusätzliche Funktionsoption im Fahrzeug vorgesehene Geräte wie Fahrzeugfunktionsgeräte, Radio, Telefon, Navigationssystem, Klimasystem, Heizungssystem und dergleichen behinderungsfrei vom Fahrer mit einer Hand bedienbar sind. Aufgrund des stark vereinfachten Bedienmanagements und der ergonomisch optimierten Anordnung und Ausführung der erfindungsgemäßen Einrichtung ist deren Ablenkungsgrad bei ihrer Bedienung durch den Fahrer während einer Fahrzeugfahrt äußerst gering, so dass eine hohe Verkehrssicherheit gegeben ist.

Die erfindungsgemäße Einrichtung weist im wesentlichen wenigstens ein zentrales Display, einen zu deren Anzeigesteuerung vorgesehenen Display-Rechner (oder einen gleichwertigen Rechner) sowie eine mit diesen korrespondierende Bedienvorrichtung auf, mittels dieser der Fahrer das optische Anzeigen, Anwählen, Auswählen, bzw. Beeinflussen fahrzeugrelevanter und/oder komfortbezogener Informationsinhalte (wie beispielsweise Signale, Hinweise, Warnungen, Handlungsempfehlungen, Geräteinstellungen etc.) bzw. das Manipulieren von Gerätefunktionen manuell auslösen kann. Das zentrale Display weist einen gemeinsamen Darstellungsraum zum Aufzeigen dieser Informationsinhalte auf, welcher gegebenenfalls zwecks Aufzeigen voneinander verschiedener Informationsinhalte in voneinander separierbare Darstellungsbereiche unterteilbar ist. Des weiteren ist das zentrale Display in voneinander verschiedenen Betriebsarten, vorzugsweise einem Normalbetrieb und optional vorgesehener Sonderbetriebe, wie beispielsweise einem Menübetrieb, einem Grafikbetrieb und dergleichen, gegebenenfalls durch entsprechende Betätigung der Bedienvorrichtung betreibbar.

Die Erfindung wird dadurch gekennzeichnet, dass die auf einem oder mehreren Darstellungsbereichen und/oder deren einzelnen Darstellungsplätzen aufgezeigten Informationsinhalte gegebenenfalls autonom oder mittels der Bedienvorrichtung in einem zeitlichen Abstand auf demselben Darstellungsplatz anzeigbar sind.

Bei einem Normalbetrieb des zentralen Displays ist dessen gesamter Darstellungsraum vorzugsweise für das Aufzeigen autonomer, vom Fahrer mittels der Bedienvorrichtung unbeeinflussbarer, gegebenenfalls unterschiedlicher Informationsinhalte reserviert.

Bei einem Sonderbetrieb des zentralen Displays, wie beispielsweise einem Menübetrieb oder einem Grafikbetrieb oder dergleichen ist der gesamte Darstellungsraum des Displays für das Aufzeigen autonomer Informationsinhalte und für das Aufzeigen veränderbarer, vom Fahrer gegebenenfalls mittels der Bedienvorrichtung anforderbarer und/oder beeinflussbarer

Informationsinhalte reserviert, wobei mittels der Bedienvorrichtung zusätzlich zur Anzeige im zentralen Display diverse Funktionsoptionen (Bedienanforderungen) bei unterschiedlichen Geräten (Fahrzeugfunktionsgeräten, Telefon, Radio, Navigationssystem, Klimasystem, Heizungssystem etc.) auslösbar sind. Als Aufzeigen von Informationsinhalten im Darstellungsraum des zentralen Displays kann das bloße Darstellen (Anzeigen) von Texten, Symbolen, Zahlen, Hinweisen etc. oder bedarfsweise das An- bzw. Auswählen derselben verstanden sein.

Es ist somit eine Einrichtung gegeben, mittels dieser einerseits eine zentrale Darstellung von fahrzeuginterner bzw. fahrzeugrelevanter Daten sowie komfortbezogener Informationsinhalte und andererseits eine bequeme Bedienung von im Fahrzeug vorgesehener Geräte realisierbar ist.

Gemäß einer weiteren Ausgestaltung der Erfindung können die mittels der Bedienvorrichtung auslösbaren Funktionsoptionen (Bedienanforderungen) bei im Fahrzeug vorgesehenen Geräten, vorzugsweise von der Bedienvorrichtung über den Display-Rechner (oder einem gleichwertigen Rechner) an einen Zielrechner des jeweiligen funktionsangeforderten Gerätes (Fahrzeugfunktionsgerät, Telefon, Radio, Navigationssystem, Klimasystem, Heizungssystem etc.) ausgebbar sein, wobei mittels des jeweiligen Zielrechners des betreffenden Gerätes eine bei letzterem wunschgemäß ausgelöste Funktionsänderung über den Display-Rechner am zentralen Display als veränderter Informationsinhalt zur Anzeige bringbar ist.

Gemäß einer weiteren Ausgestaltung der Erfindung kann das der Einrichtung zugehörige, zentrale Display fest in einer im primären Blickfeld des Fahrers befindlichen Armaturentafel installiert sein. Die der Einrichtung zugehörige Bedienvorrichtung kann in einem behinderungsfreien, primären Bedienfeld des Fahrers angeordnet und ohne dessen Positionsveränderung mit einer Hand des Fahrers funktionssicher bedienbar sein. Beispielsweise kann das zentrale Display zwischen einer Drehzahl-Anzeigeeinrichtung und einer Anzeigeeinrichtung für die Fahrgeschwindigkeit in einer Armaturentafel des Kraftfahrzeuges angeordnet sein.

Gemäß einer weiteren Ausgestaltung der Erfindung können bei Normalbetrieb des zentralen Displays in dessen gesamten Darstellungsraum vorzugsweise fahrzeugrelevante Informationsinhalte und optional in hierfür reservierbaren, separaten Darstellungsbereichen des zentralen Displays bedarfsweise komfortbezogene Informationsinhalte aufzeigbar sein. Bei Sonderbetrieb (Menübetrieb, Grafikbetrieb etc.) des zentralen Display können vorzugsweise komfortbezogene Informationsinhalte in den einzelnen Darstellungsbereichen des Darstellungsraumes zentralen Displays aufzeigbar sein.

Gemäß einer weiteren Ausgestaltung der Erfindung kann bei sämtlichen Betriebsarten des zentralen Displays innerhalb dessen gesamten Darstellungsraumes wenigstens ein separater, erster Darstellungsbereich für das kontinuierliche Aufzeigen ausschließlich autonom anzeigefähiger, vom Fahrer mittels der Bedienvorrichtung unbeeinflussbarer, fahrzeuginterner Informationsinhalte reserviert sein. Als autonom anzeigefähige, unbeeinflussbare Anzeigen fahrzeugbezogener Informationsinhalte können beispielsweise eine Stopp-Kennzeichnung, Dauerbremsanzeige, Retarderstufenwahl, Motorbremseingriff und/oder Retardereingriff, Ganganzeige für ein Handschaltgetriebe oder Anzeigen eines automatisierten Schaltgetriebes bzw. Automatikgetriebes, Abstandsanzeigen und dergleichen vorgesehen sein.

Gemäß einer weiteren Ausgestaltung der Erfindung kann der wenigstens eine erste Darstellungsbereich vorzugsweise im obersten Bereich des gesamten Darstellungsraumes des zentralen Displays angeordnet sein. Somit ist diesen wichtigen Informationsinhalten innerhalb des zentralen Displays eine Position erhöhten Aufmerksamkeitsgrades zugewiesen.

Gemäß einer weiteren Ausgestaltung der Erfindung können bei Normalbetrieb des zentralen Displays die Informationsinhalte fahrzeugrelevanter Anzeigen vorzugsweise dauerhaft und gegebenenfalls im gesamten Darstellungsraum des zentralen Displays aufzeigbar sein.

Des weiteren können bei Normalbetrieb des zentralen Displays bedarfsweise die Informationsinhalte komfortbezogener Anzeigen (Fahrzeugfunktionsgeräte, Radio, Telefon, Navigationssystem, Klimasystem, Heizungssystem etc.) optional ausschnittsweise und/oder temporär in hierfür reservierbaren Darstellungsbereichen des zentralen Displays aufzeigbar sein. Im letzterem Fall kann es unerheblich sein, ob die die Anzeigen im zentralen Display bedingenden Geräte konventionell per Hand oder mittels der Bedienvorrichtung aktiviert sind. Sämtliche Geräte können auch ohne Aktivierung der Bedienvorrichtung betreibbar sein.

Gemäß einer weiteren Ausgestaltung der Erfindung kann die Bedienvorrichtung im wesentlichen aus mehreren, druckbetätigbaren Bedienschaltern zur bedarfsweisen Anwahl des Normalbetriebs oder der optionalen Sonderbetriebsarten (Menübetrieb, Grafikbetrieb etc.) des zentralen Displays sowie aus einem einzelnen, dreh- und druckbetätigbaren, mit einer Auswahlmarkierung im zentralen Display korrespondierenden Bediensteller bestehen. Des weiteren können mittels der Bedienschalter - unabhängig von der jeweiligen Betriebsart des Displays - zusätzlich verschiedene Menüwechselfunktionen wie beispielsweise ("Menü-Ausstieg" (Verlassen-Taste) "Menüebenen-Anwahl" (Rücksprung-Taste) etc.) anwählbar sein.

Des weiteren kann mittels des Bedienstellers bei dessen Drehbetätigung eine örtliche Verstellung der Auswahlmarkierung im Display auslösbar sein, wodurch gegebenenfalls weitere Anzeige- und/oder Funktionsoptionen (Untermenüs) anbietbar und per Druckbetätigung des Bedienstellers auslösbar sind.

Gemäß einer weiteren Ausgestaltung der Erfindung kann für die gesamte Betriebsdauer der Einrichtung - unabhängig von deren Betriebsart - bei einer entsprechenden Untermenüauswahl - entweder bei konventionell per Hand aktiviertem Gerät (Radio, Telefon etc.) oder bei mittels Bedienschalter aktiviertem Gerät (Radio, Telefon etc.) ein separater, positionskonstanter zweiter Darstellungsbereich im Darstellungsraum des zentralen Displays für das Aufzeigen diesbezüglicher Informationsinhalte, wie beispielsweise Sendername, Telefongesprächsteilnehmer-Name, Telefongesprächsteilnehmer-Nummer etc. reserviert bleiben, falls keine fahrzeugrelevanten Informationsinhalte (events) zum Aufzeigen im Display anstehen. Die aktuell einblendbaren, fahrzeugrelevanten Informationsinhalte (events) können nach erneuter Bedienanforderung des verdrängten Hauptmenüs - beispielsweise "Radio ein" oder "Navigationssystem ein" - durch Anwahl des betreffenden Bedienschalters (Radiofunktion, Navigationsfunktion oder dergleichen) rückgängig gemacht und die ursprüngliche Menüeinstellung/Geräteeinstellung wiederhergestellt werden.

Gemäß einer weiteren Ausgestaltung der Erfindung kann der Bediensteller in bestimmten, aufeinanderfolgenden Drehwinkelpositionen einstellbar sein, wobei die Auswahlmarkierung im zentralen Display schrittweise zu jeweiligen Darstellungspositionen (Menüeinträgen) bewegbar ist. Der Bediensteller kann in seinen jeweiligen Drehwinkelpositionen bedarfsweise geringfügig einrastfähig sein, so dass genau definierte Drehwinkelpositionen erzielbar sind. Des weiteren kann die Bewegungsrichtung der Auswahlmarkierung im zentralen Display von der Drehrichtung des Bedienstellers abhängig sein.

Gemäß einer weiteren Ausgestaltung der Erfindung kann ein Zeilenwechsel der Auswahlmarkierung von einem Zeilenende zum Anfang der nächstfolgenden Zeile einer oder mehrerer Darstellungsbereiche durch Drehung des Bedienstellers in eine erste Richtung, insbesondere nach rechts und ein Zeilenwechsel der Auswahlmarkierung vom Anfang einer Zeile zum Ende einer vorhergehenden Zeile durch Drehen des Bedienstellers in eine zweite Richtung, insbesondere nach links gesteuert sein.

Gemäß einer weiteren Ausgestaltung der Erfindung können bedarfsweise voneinander abzugrenzende Darstellungsbereiche im Darstellungsraum des zentralen Displays durch Trennmarkierungen, beispielsweise Trennlinien, Umrandungen oder dergleichen optisch voneinander abgrenzbar sein. Des weiteren können einander benachbarte Darstellungsbereiche innerhalb des Darstellungsraumes des zentralen Displays bei Ähnlichkeit ihres Informationsinhaltes einen voneinander unabgegrenzten, gemeinsamen Darstellungsbereich bilden.

Gemäß einer weiteren Ausgestaltung der Erfindung können die einzelnen Darstellungsbereiche des gesamten Darstellungsraumes des zentralen Displays zeilenartig und/oder spaltenartig ausgebildet sein und aus einzelnen, aneinandergrenzenden Darstellungsplätzen bestehen. Des weiteren können die einzelnen Darstellungsbereiche gegebenenfalls durch weitere Unterzeilen/Unterspalten mit hierin vorsehbaren, separaten Darstellungspositionen unterteilbar sein. Die Art der Belegung einzelner Darstellungsplätze in diesem Darstellungsbereich durch diverse Informationsinhalte kann in den einzelnen Darstellungsbereichen variieren. So ist beispielsweise lediglich eine Teilbelegung eines Darstellungsbereiches oder beispielsweise eine Platzbeanspruchung eines einzelnen Symbols oder Texthinweises über mehrere Darstellungsplätze hinweg möglich.

Gemäß einer weiteren Ausgestaltung der Erfindung können bei Normalbetrieb des zentralen Displays bei Verzicht zusätzlicher Darstellungen komfortbezogener Informationsinhalte (Radio, Telefon etc.) sämtliche Darstellungsbereiche des Displays zum Aufzeigen autonom rollierender Informationsinhalte, Symbole, Warnungen, Hinweise, Handlungsempfehlungen oder dergleichen nutzbar sein.

Gemäß einer weiteren Ausgestaltung der Erfindung kann mittels jeden Bedienschalters eine Anzeige im Display und gegebenenfalls eine Funktion eines fahrzeuginternen Gerätes auslösbar sein, wobei jeweils ein definierter Bedienschalter für die Anwahl und Auslösung einer einzelnen Hauptfunktion (Hauptmenü) wie beispielsweise "Fahrzeugfunktionen", "erweitere Radiofunktion", "erweitere Telefonfunktion", "Navigationsfunktion", "Klimatisierungssystem", "Heizungssystem" und dergleichen weiterer Fahrzeugfunktionen bzw. fahrzeugfremder Funktionen sowie weitere Bedienschalter für die Auslösung weiterer Funktionen wie beispielsweise "Menü-Ausstieg (Verlassen-Taste), "Menüebenen-Anwahl" (Rücksprung-Taste) etc.) reserviert sein. Es können bedarfsweise zusätzliche Bedienschalter in der Bedienvorrichtung vorsehbar sein.

Gemäß einer weiteren Ausgestaltung der Erfindung kann zusätzlich zum Abruf der Hauptfunktionen (Hauptmenüs) der fahrzeuginternen Geräte mittels der Bediensteller jeweils weitere, funktionsverwandte Geräte, beispielsweise zusätzlich zu einem Radio weitere CD-Spieler, CD-Wechsler oder Kassettenrecorder, und beispielsweise zu einem Telefon weiters ein Telefax etc. - aufrufbar und bedienbar - sein.

Gemäß einer weiteren Ausgestaltung der Erfindung können bei Sonderbetrieb (Menübetrieb, Grafikbetrieb etc.) des zentralen Displays zusätzlich zu einem hierfür reservierten, zweiten Darstellungsbereich weitere, diesen ergänzende Darstellungsbereiche zum Aufzeigen in den Hauptmenüs ("Radiofunktion", "Telefonfunktion", "Navigationsfunktion", "Fahrzeugfunktionen", "Klimatisierungsfunktionen", "Heizungsfunktionen" etc.) aufrufbarer Informationsinhalte beanspruchbar sein.

Gemäß einer weiteren Ausgestaltung der Erfindung kann die Auswahlmarkierung im zentralen Display durch eine umgebungskonträre Darstellung ihrer selbst oder ihres Hintergrundes optisch hervorgehoben sein. Als Auswahlmarkierung kann beispielsweise ein Cursor, eine Blockmarkierung oder dergleichen vorgesehen sein.

Gemäß einer weiteren Ausgestaltung der Erfindung kann bei Auftreten geänderter Fahrzeugbedingungen (events) ein Aufzeigen prioritätsniedrigerer Informationsinhalte im zentralen Display, beispielsweise komfortbezogener Informationsinhalte, durch ein Aufzeigen fahrzeugspezifischer, prioritätshöherer Informationsinhalte (Warnungen, Hinweise, Symbole etc.) überblendbar sein. Des weiteren können diese prioritätshöheren Informationsinhalte gegebenenfalls zusätzlich und zeitgleich in benachbart zum zentralen Display angeordneter Kontrollleuchten in der Armaturentafel anzeigbar sein.

Gemäß einer weiteren Ausgestaltung der Erfindung kann das Aufzeigen prioritätshöherer Informationsinhalte (Warnungen, Hinweise etc.) im zentralen Display und gegebenenfalls in den hierzu benachbarten Kontrollleuchten mit erhöhter Anzeigedauer und/oder mit markantem Farbkontrast ausführbar sein. Des weiteren kann der jeweilige Prioritätsgrad dieser aufgezeigten, gegebenenfalls prioritätshöheren Informationsinhalte mittels spezifischer Farbsymbolik anzeigbar sein. Somit können beispielsweise für prioritätshöchste Informationsinhalte rote Farbanzeigen und für prioritätsniedrigere Informationsinhalte sanftere Farbanzeigen in blauer oder gelber Farbe vorsehbar sein.

Gemäß einer weiteren Ausgestaltung der Erfindung kann die Darstellung prioritätsgleicher Informationsinhalte im Display turnusmäßig wiederholt (Autorollieren) aufzeigbar sein.

Gemäß einer weiteren Ausgestaltung der Erfindung können die im Sonderbetrieb (Menübetrieb, Grafikbetrieb etc.) des zentralen Displays aufzeigbaren Informationsinhalte bedarfsweise mittels des druck- und drehbetätigbaren Bedienstellers und der Auswahlmarkierung im Display anwählbar und bei Druckbetätigung des Bedienstellers in den Status einer Monitoranzeige (Daueranzeige) in einen im Normalbetrieb des Displays befindlichen Darstellungsbereich wenigstens temporär überführbar sein. Diese wenigstens temporär aufzeigbaren, gegebenenfalls komfortbezogenen Informationsinhalte können bei Auftreten geänderter Fahrzeugbedingungen (events) durch deren Aufzeigen verdrängbar, jedoch in ursprünglicher Einstellung bei Bedienanforderung mittels Bedienschalter 3 bedarfsweise rückholbar sein.

Gemäß einer weiteren Ausgestaltung der Erfindung kann die Anzahl möglicher im zentralen Display aufzeigbarer Informationsinhalte gegebenenfalls größer sein als die Anzahl der im gesamten Darstellungsraum des zentralen Displays vorhandener Darstellungsplätze, wobei die quasi in Warteposition befindlichen Informationsinhalte gegebenenfalls mittels der Bedienvorrichtung abrufbar und/oder in den einzelnen Darstellungsbereichen des zentralen Displays autonom rollierend - gegebenenfalls synchronrollierend - aufzeigbar sind.

Gemäß einer weiteren Ausgestaltung der Erfindung kann bei Normalbetrieb und bei Menübetrieb des zentralen Displays vorzugsweise der Display-Rechner (Anzeigensteuerung) die grafische Gestaltung der im zentralen Display aufzeigbaren Informationsinhalte vorgeben. Des weiteren kann bei Grafikbetrieb des zentralen Displays vorzugsweise das gegebenenfalls vorgesehene Gerät (Navigationssystem, Klimasystem etc.) bzw. dessen Zielrechner die grafische Gestaltung der im zentralen Display aufzeigbaren Informationsinhalte vorgeben. Des weiteren können bei sämtlichen Betriebsarten (Normalbetrieb, Sonderbetrieb) des zentralen Displays die grafische Gestaltung der im zentralen Display aufzeigbaren Informationsinhalte vorzugsweise einen vereinheitlichten Anmutungscharakter aufweisen.

Des weiteren kann die von dem Navigationssystem ursächlich generierte Grafikausgabe (Informationsinhalte) vom Display-Rechner vollständig und unverändert in einen oder mehrere Darstellungsbereiche des Displays übernommen und angezeigt werden.

Gemäß einer weiteren Ausgestaltung der Erfindung können bei der Bedienvorrichtung die zur Auswahl von einzelnen Menüebenen vorgesehenen Bedienschalter vorzugsweise oberhalb des Bedienstellers und die zur Auswahl der Hauptmenüs vorgesehenen Bedienschalter vorzugsweise in einem Bereich rechts oder links neben dem Bediensteller spaltenartig untereinander angeordnet sein.

Des weiteren können der Bediensteller sowie die Bedienschalter sämtlich ohne weitere Positionsveränderungen einer Bedienhand erreichbar und funktionssicher bedienbar sein. Vorzugsweise befinden sich sämtliche Bedienschalter in einem örtlich vorteilhaft begrenzten und für die Bedienhand ergonomisch günstigen Anordnungsfeld.

Gemäß einer weiteren Ausgestaltung der Erfindung kann nach Sonderbetrieb (Menübetrieb, Grafikbetrieb etc.) des zentralen Displays eine Rückkehr zu einem Normalbetrieb des zentralen Displays entweder durch Betätigung des Bedienschalters "Menü-Ausstieg" (Verlassen-Taste) auslösbar sein. Alternativ hierzu kann diese Rückkehr zum Normalbetrieb des Displays selbstständig durch Nichtbetätigung des Bedienstellers nach einem definierten Zeitablauf (Zeitsprung) - ausgenommen bei einem Grafikbetrieb des Navigationssystems - auslösbar sein. Als dritte Variante kann eine Rückkehr zum Normalbetrieb des Displays selbstständig durch Verdrängung momentan aufgezeigter Informationsinhalte des Sonderbetriebs (Menübetrieb, Grafikbetrieb etc.) durch aktuell aufgezeigte, fahrzeugrelevante Informationsinhalte (events) eines gegebenenfalls höheren Prioritätsgrades auslösbar sein. Des weiteren sind gegebenenfalls bei Unterbrechung des Sonderbetriebs des Displays durch aktuelle Informationsinhalte (events) nach erneutem Aufruf desselben Sonderbetriebs in vorteilhafter Weise wieder dieselben Einstellungen bzw. Untermenüs aufzeigbar (Wiedereintrittsfunktion).

Bei Rückkehr in den Normalbetrieb des zentralen Displays bleiben die aktivierten Geräte (Fahrzeugfunktionsgeräte, Radio, Telefon, Navigationssystem, Klimasystem etc.) weiterhin in Betrieb.

Nachstehend ist die erfindungsgemäße Lösung anhand eines in der Zeichnung dargestellten Ausführungsbeispieles noch näher erläutert.

In der Zeichnung zeigen:
- Fig. 1: als Blockschaltbild eine logische Verknüpfung der Bestandteile eines Ausführungsbeispieles der erfindungsgemäßen Einrichtung,
- Fig. 2: ein Ausführungsbeispiel einer der Einrichtung zugehörigen Bedienvorrichtung,
- Fig. 3: verschiedene Ausführungsmöglichkeiten eines Darstellungsraumes eines der Einrichtung zugehörigen zentralen Displays,
- Fig. 4: einen Darstellungsraum eines in Normalbetrieb befindlichen zentralen Displays,
- Fig. 5: einen Darstellungsraum eines in Normalbetrieb befindlichen Displays mit zusätzlichem Texthinweis,
- Fig. 6: einen Darstellungsraum eines in Normalbetrieb befindlichen Displays bei zusätzlich eingeschaltetem Radio,
- Fig. 7: ein Darstellungsraum eines in Normalbetrieb befindlichen Displays mit zusätzlicher Darstellung von Symbolen,
- Fig. 8: eine Vollbelegung eines Darstellungsraumes eines in Normalbetrieb befindlichen Displays mit zusätzlicher Trennlinie,
- Fig. 9: einen Darstellungsraum eines im Menübetrieb "Fahrzeugdaten" befindlichen Displays mit Vollbelegung mehrerer Darstellungsbereiche des Darstellungsraumes,
- Fig. 10: ein Darstellungsraum eines im Menübetrieb "Fahrzeugdaten" befindlichen Displays mit einem aufgezeigten Untermenü,
- Fig. 11: ein Darstellungsraum eines in einem Menübetrieb "Radio" befindlichen Displays mit Vollbelegung mehrerer Darstellungsbereiche mit unterschiedlichen Menüebenen,
- Fig. 12: einen Darstellungsraum eines im Navigationsbetrieb befindlichen Displays mit Vollbelegung mehrerer Darstellungsbereiche mit komplexeren Grafiken,
- Fig. 13: ein Darstellungsraum eines im Menübetrieb "Fahrzeugdaten" befindlichen Displays (Hauptmenü),
- Fig. 14: ein Darstellungsraum eines in einem Menübetrieb "Fahrzeugdaten" befindlichen Displays (Untermenü), und
- Fig. 15: ein Darstellungsraum eines in einem Normalbetrieb befindlichen Displays mit "Monitordarstellung".

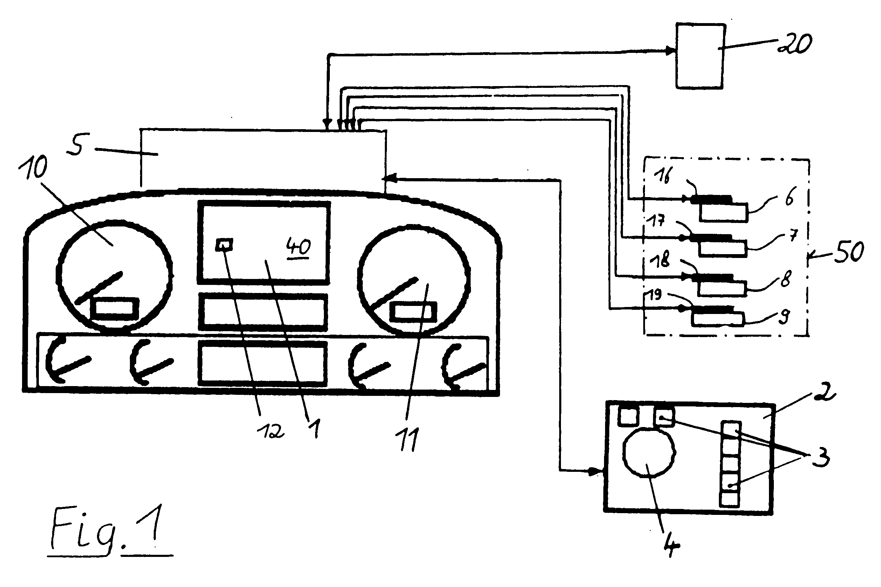

In Fig. 1 ist als Blockschaltbild eine logische Verknüpfung der Bestandteile eines Ausführungsbeispiels einer erfindungsgemäßen Einrichtung gezeigt. Die Einrichtung ist zur bedarfsweise manuell durch den Fahrer auslösbaren, optischen Anzeige, Auswahl bzw. Beeinflussung fahrzeugrelevanter und/oder komfortbezogener Informationsinhalte wie Signale, Hinweise, Warnungen, Handlungsempfehlungen, Geräteeinstellungen etc. bzw. Gerätefunktionen vorgesehen und besitzt für eine zentrale Anzeige dieser fahrzeugbezogenen oder komfortbezogenen Informationsinhalte im Wesentlichen ein zentrales Display 1, welches im Fahrersichtfeld angeordnet ist. Dieses befindet sich bei dem dargestellten Ausführungsbeispiel zwischen einer Drehzahlanzeigeeinrichtung 10 und einer Anzeigeeinrichtung 11 für die Fahrzeuggeschwindigkeit. Die Einrichtung befindet sich in einer Armaturentafel vor einem Lenkrad des Kraftfahrzeuges. Als Kraftfahrzeug ist vorzugsweise ein Nutzfahrzeug, beispielsweise ein Lastkraftwagen oder ein Omnibus vorgesehen. Zusätzlich zum zentralen Display 1 weist die Einrichtung einen für die Anzeigesteuerung vornehmlich des Displays 1 vorgesehenen Display-Rechner 5 oder einen gleichwertigen Rechner sowie eine mit dem zentralen Display 1 und dem Display-Rechner 5 korrespondierende Bedienvorrichtung 2 auf.

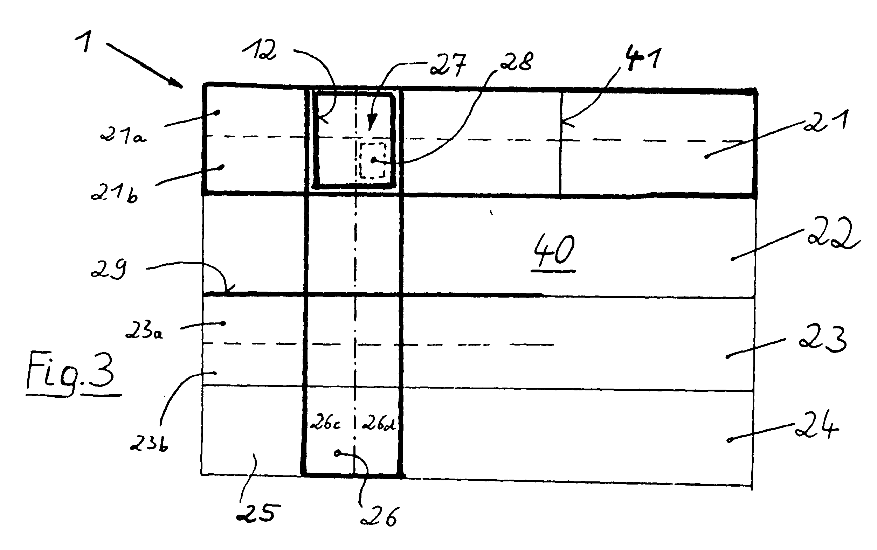

Das zentrale Display 1 weist einen gemeinsamen Darstellungsraum 40 zum Aufzeigen diverser Informationsinhalte auf. Dieser Darstellungsraum 40 ist gegebenenfalls zwecks Aufzeigen von einander verschiedene Informationsinhalte in voneinander separierbare Darstellungsbereiche 21, 22, 23, 24, 25, 26 (Fig. 3) unterteilbar. Das zentrale Display 1 ist in voneinander verschiedene Betriebsarten, vorzugsweise einem Normalbetrieb und optional vorgesehener Sonderbetriebe (Menübetrieb, Grafikbetrieb etc.) gegebenenfalls durch entsprechende Betätigung der Bedienvorrichtung 2 betreibbar. Bei einem Normalbetrieb des zentralen Displays 1 ist dessen gesamter Darstellungsraum 40 vorzugsweise für das Aufzeigen autonomer vom Fahrer mittels der Bedienvorrichtung 2 unbeeinflussbarer gegebenenfalls unterschiedlicher Informationsinhalte 20 reserviert, welche im Wesentlichen aus fahrzeugrelevanten Informationsinhalten wie Daten von Fahrzeugfunktionen und dergleichen bestehen. Bei einem Sonderbetrieb (Menübetrieb, Grafikbetrieb etc.) des zentralen Displays 1 ist dessen gesamter Darstellungsraum 40 vorzugsweise für das Aufzeigen veränderbarer, vom Fahrer gegebenenfalls mittels der Bedienvorrichtung 2 anforderbarer und/oder beeinflussbarer, vorzugsweise einander sinnverwandter Informationsinhalte 50 reserviert, wobei mittels der Bedienvorrichtung 2 zusätzlich zur Anzeige im zentralen Display 1 diverse Funktionsoptionen (Bedienanforderungen) bei unterschiedlichen Geräten wie beispielsweise Fahrzeugfunktionsgeräten 6, Radio 7, Telefon 8, Navigationssystem 9, Klimasystem, Heizungssystem usw. auslösbar sind. Die Zahl der im zentralen Display 1, dessen Display-Rechner 5 und der Bedienvorrichtung 2 in Wirkverbindung stehender Geräte ist nicht auf die benannten beschränkt und in ihrer Anzahl erweiterbar. Die mittels der Bedienvorrichtung 2 gegebenenfalls beeinflussbaren Informationsinhalte sind mit der Bezugsziffer 50 bezeichnet und im Blockschaltbild symbolhaft durch die strichpunktierte Umrandung hiervon zumindest teilweise betroffener Geräte 6, 7, 8, 9 beispielhaft angezeigt. Die mittels der Bedienvorrichtung 2 weitestgehend unbeeinflussbaren Informationsinhalte 20 sind Fahrzeugdaten und/oder fahrzeugrelevante Fahrzeugbetriebsdaten, welche für die Zustandserkennung des Fahrzeugs erforderlich sind und gegebenenfalls über einen weiteren Kommunikations-Daten-Bus an dem Display-Rechner 5 (oder einem vergleichbaren Rechner) angebunden sein können.

Das in Fig. 1 dargestellte Blockschaltbild zeigt die logische Verknüpfung von Bedienvorrichtung 2, den bedienbaren Geräten 6, 7, 8, 9, dem Display 1, dem Display-Rechner 5 und den fahrzeugbezogenen Informationsinhalten 20. Diese logische Verknüpfung kann in der Praxis über gegebenenfalls einen zweiten Datenbus, beispielsweise als serieller Datenbus verwirklicht sein. Die mittels der Bedienvorrichtung 2 auslösbaren Funktionsoptionen (Bedienanforderungen) bei den diversen Geräten 6, 7, 8, 9 sind vorzugsweise von der Bedienvorrichtung 2 über den Display-Rechner 5 oder einem gleichwertigen Rechner an jeweils einen Zielrechner 16, 17, 18, 19 des jeweils funktionsangeforderten Gerätes wie beispielsweise einem Fahrzeugfunktionsgerät 6, einem Radiogerät 7, einem Telefon 8, einem Navigationssystem 9, einem Klimasystem, einem Heizungssystem usw. anwählbar. Dabei ist mittels des jeweiligen Zielrechners 16, 17, 18, 19 des betreffenden Gerätes 6, 7, 8, 9 eine bei letzterem wunschgemäß ausgelöste Funktionsänderung über den Display-Rechner 5 am zentralen Display 1 als veränderter Informationsinhalt zur Anzeige bringbar. Abgesehen von den auslösbaren und aufzeigbaren Funktionsoptionen/Änderungen können in der jeweiligen Sonderbetriebsart oder im Normalbetrieb des Displays 1 die verschiedenen Betriebszustände und/oder die Betriebskonfigurationen der verschiedenen Geräte 6, 7, 8, 9 im Display 1 angezeigt werden.

Die der Einrichtung zugehörige Bedienvorrichtung 2 ist in einem behinderungsfreien, primären Bedienfeld des Fahrers angeordnet und ohne dessen Positionsveränderung mit einer Hand funktionssicher bedienbar. Die Bedienvorrichtung 2 besteht im Wesentlichen aus mehreren, druckbetätigbaren Bedienschaltern 3 zur bedarfsweisen Anwahl des Normalbetriebs oder der optionalen Sonderbetriebsarten (Menübetrieb, Grafikbetrieb etc.) des zentralen Displays 1 sowie aus einem einzelnen, dreh- und druckbetätigbaren, - mit einer Auswahlmarkierung 12 im zentralen Display 1 korrespondierenden - Bediensteller 4 besteht.

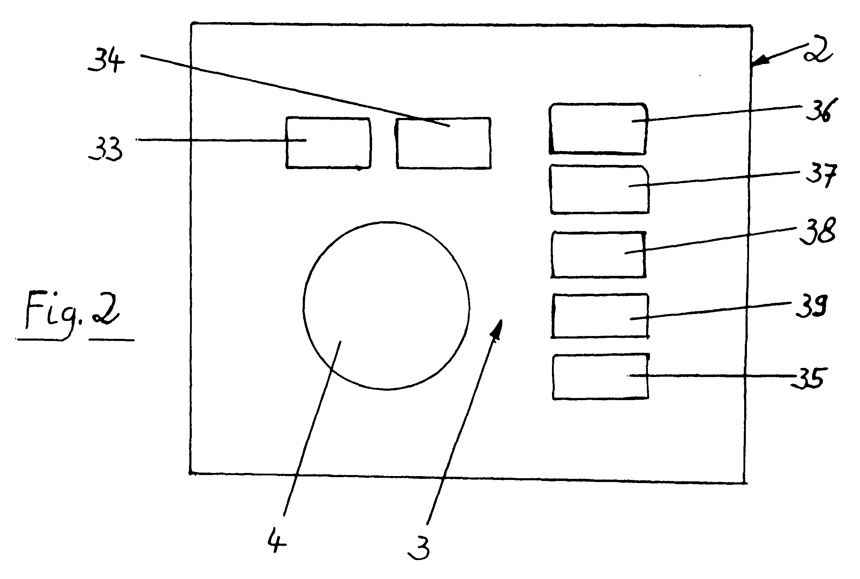

In Fig. 2 ist als Ausführungsbeispiel eine Bedienvorrichtung 2 dargestellt, welche aus diversen druckbetätigbaren Bedienschaltern 3 und dem einzelnen druck- und drehbetätigbaren Bediensteller 4 besteht. Mit den einzelnen Bedienschaltern 3 können unterschiedliche Funktionen auslösbar sein. Die Anzahl und die Funktionen der einzelnen Bedienschalter 3 können von dem hier gezeigten Ausführungsbeispiel abweichen. Des weiteren kann gegebenenfalls die Funktion "Druckbetätigung" des Bedienstellers 4 in einen separaten Bedientaster innerhalb der Bedienvorrichtung 2 verlagert sein. Es ist ebenso eine andere Anordnung der einzelnen Bedienschalter 3 denkbar. Mit dem hier gezeigten Ausführungsbeispiel sind als Bedienschalter 3 verschiedene Bedienschalter 33, 34, 35, 36, 37, 38, 39 für diverse Menüwechselfunktionen vorgesehen. So ist ein Bedienschalter 33 für einen kompletten "Menü-Ausstieg" (Verlassen-Taste) vorgesehen und mit einem entsprechenden Symbol gekennzeichnet. Mit einem Bedienschalter 34 ist eine Funktion "Menüebenen-Anwahl" (Rücksprung-Taste) ermöglicht, wobei mittels dieses Bedienschalters 34 bei jeder Druckbetätigung die nächsthöhere Menüebene eines im Menübetrieb befindlichen zentralen Displays 1 anwählbar ist. Mit einem weiteren, hier nicht mit einem Symbol belegten Bedienschalter 35 ist als Hauptfunktion beispielsweise ein Hauptmenü eines Klimatisierungssystems des im Menübetrieb befindlichen zentralen Displays 1 anwählbar. Mittels eines Bedienschalters 36 sind Hauptfunktionen bzw. Hauptmenüs von Fahrzeugfunktionen in einem im Menübetrieb befindlichen zentralen Displays 1 anwählbar. Mittels eines darunter befindlichen Bedienschalters 37 sind als Hauptfunktion bzw. als Hauptmenü ein Radiogerät 7 anwählbar und dessen Informationsinhalte auf einem in einem Menübetrieb befindlichen zentralen Displays 1 zur Anzeige bringbar. Mittels eines Bedienschalters 38 ist als Hauptfunktion bzw. Hauptmenü ein Navigationssystem 9 (Fig. 1) aufrufbar und in einem Grafikbetrieb befindlichen zentralen Displays 1 zur Anzeige bringbar. Des weiteren ist mit dem Aufrufen der Hauptfunktion (Hauptmenü) gegebenenfalls zusätzlich das betreffende Gerät 6, 7, 8, 9 in den Betriebszustand versetzt.

Bei der Bedienvorrichtung 2 sind die zur Auswahl von einzelnen Menüebenen vorgesehen Bedienschalter 33, 34 vorzugsweise oberhalb des Bedienstellers 4 und die zur Auswahl der jeweiligen Hauptmenüs (Hauptfunktionen) der Geräte 6, 7, 8, 9 usw. vorgesehenen Bedienschalter 35, 36, 37, 38, 39 vorzugsweise in einem Bereich rechts oder links neben dem Bediensteller 4 spaltenartig untereinander angeordnet. In vorteilhafter Weise ist der Bediensteller 4 sowie sämtliche Bedienschalter 3 sämtlich ohne weitere Positionsveränderungen von einer Bedienhand ergonomisch optimiert erreichbar und funktionssicher bedienbar.

Mittels der Bedienschalter 3 sind - unabhängig von der jeweiligen Bedienart des zentralen Displays 1 - zusätzlich verschiedene Menüwechselfunktionen wie beispielsweise der "Menü-Ausstieg" oder die "Menüebenen-Anwahl" auswählbar. Mittels des druck- und drehbetätigbaren Bedienstellers 4 ist bei dessen Drehbetätigung eine örtliche Verstellung der Auswahlmarkierung 12 im zentralen Display 1 auslösbar, wobei gegebenenfalls weitere Anzeige-und/oder Funktionsoptionen im Display optisch anbietbar und per Druckbetätigung des Bedienstellers 4 auswählbar sind.

Der Bediensteller 4 ist in bestimmten, aufeinanderfolgenden Drehwinkelpositionen einstellbar, wobei die Auswahlmarkierung 12 im zentralen Display 1 schrittweise zu jeweiligen Darstellungsplätzen (Menüeinträgen) 27 (Fig. 3) bewegbar ist. Die Bewegungsrichtung der Auswahlmarkierung 12 im zentralen Display 1 ist von der Drehrichtung des Bedienstellers 4 abhängig. Ein Zeilenwechsel der Auswahlmarkierung 12 von einem Zeilenende 21 a zum Anfang der nächstfolgenden Zeile 21 b einer oder mehrerer Darstellungsbereiche 21, 22, 23, 24 ist durch Drehung des Bedienstellers 4 in eine erste Richtung, insbesondere nach rechts und ein Zeilenwechsel der Auswahlmarkierung 12 vom Anfang einer Zeile 23 b zum Ende einer vorhergehenden Zeile 23 a durch Drehen des Bedienstellers 4 in eine zweite Richtung insbesondere nach links gesteuert (Fig. 1 und Fig. 3). Nach Auswahl eines Hauptmenüs mittels einer der Bedienschalter 35, 36, 37, 38, 39 sind durch die Funktionen der Bedienschalter 33, 34 und des Bedienstellers 4 alle zugehörigen Untermenüs bzw. Auswahloptionen erreichbar, anwählbar, auslösbar oder auch verlassbar.

In Fig. 3 ist als Ausführungsbeispiel ein möglicher Darstellungsraum 40 eines zentralen Displays 1 dargestellt. Der Darstellungsraum 40 des zentralen Displays 1 ist in einzelne Darstellungsbereiche 21, 22, 23, 24, 25, 26 aufteilbar.

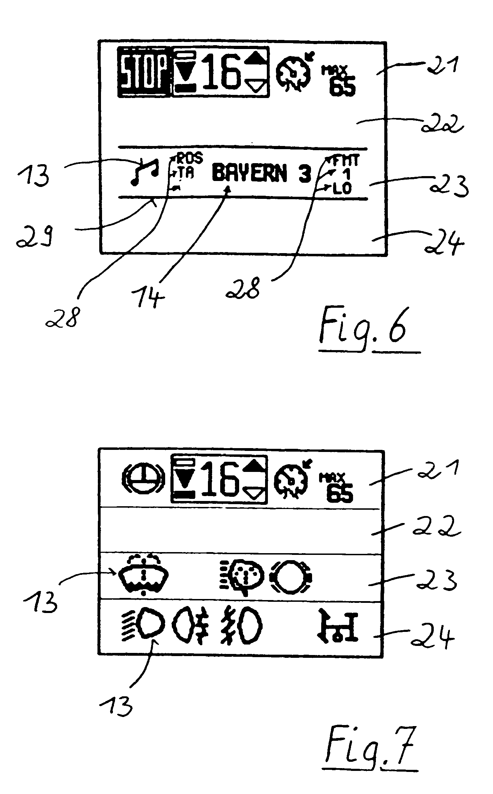

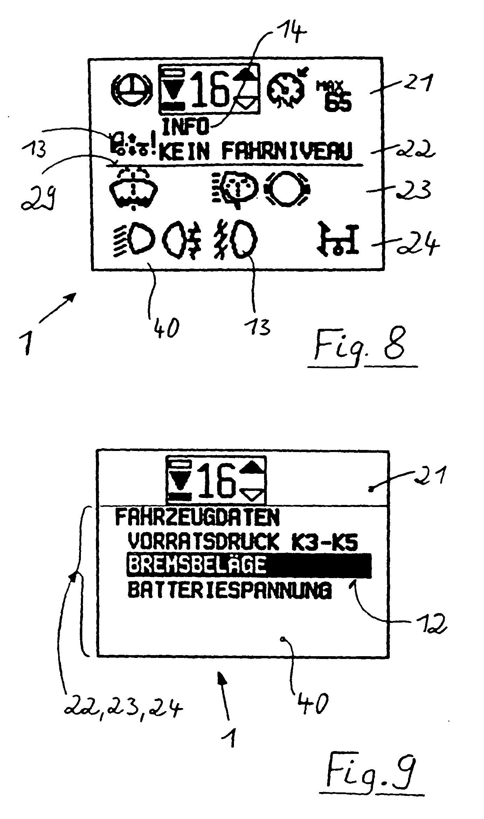

Dabei kann die Raumaufteilung/Platzbelegung innerhalb der einzelnen Darstellungsbereiche 21, 22, 23, 24, 25, 26 voneinander abweichen. So muss beispielsweise eine in einem ersten Darstellungsbereich 21 durch Zeichen, Symbole, Schrift 13, 14 erfolgte Belegung einer oder mehrerer Darstellungsplätze 27 a, b, c, d nicht zwangsläufig mit einer Unterteilung/Platzbelegung eines anderen Darstellungsbereiches 22, 23, 24 übereinstimmen. Somit ist je nach Bedarf der Darstellungsraum 40 in zeilenartige Darstellungsbereiche 21, 22, 23, 24 oder in spaltenartige Darstellungsbereiche 25, 26 usw. aufteilbar und gegebenenfalls nur bis zu einer Endbegrenzung 41 mit Zeichen, Daten, Symbolen benutzt. Die einzelnen Darstellungsbereiche 21, 22, 23, 24, 25, 26 usw. bestehen aus einzelnen, aneinandergrenzenden Darstellungsplätzen 27. Des weiteren können die einzelnen Darstellungsbereiche 21, 22, 23, 24, 25, 26 usw. gegebenenfalls durch weitere Unterzeilen 21 a, 21 b, 23 a, 23 b oder weitere Unterspalten 26 c, 26 d beliebig oft unterteilbar sein. Welche von hierin vorsehbaren, separaten Darstellungspositionen 28 weiter unterteilbar sind. Die einzelnen Unterzeilen 21 a, 21 b, 23 a, 23 b bzw. Unterspalten 26 c, 26 d können somit zur Darstellung diverser Untermenüebenen, welche mittels des Bedienstellers 4 anwählbar sind genutzt werden. Jeder einzelne Darstellungsbereich 21, 22, 23, 24, 25, 26 kann somit weitere Menüebenen oder Auswahloptionen innerhalb einer Menüebene aufweisen, innerhalb dieser diverse nebeneinander angeordnete bzw. untereinander angeordnete Darstellungspositionen anordbar sind, welche durch Drehbetätigung des Bedienstellers 4 und des mit diesem in Wirkverbindung stehenden Auswahlmarkierung 12 anpositioniert und bei Druckbetätigung des Bedienstellers 4 zur Auslösung einer spezifischen Funktion nutzbar sind. Die einzelnen Darstellungsbereiche 21, 22, 23, 24, 25, 26 usw. des Darstellungsraumes 40 des zentralen Displays 1 können durch Trennmarkierungen, beispielsweise zusätzliche Trennlinien 29 (Fig. 6, 8, 11, 15) oder hier nicht gezeigten Umrandungen oder dergleichen optisch voneinander abgegrenzt werden. Des weiteren können einander benachbarte Darstellungsbereiche 23, 24 (Fig. 7, 8, 9, 10) innerhalb des Darstellungsraumes 40 des zentralen Displays 1 bei Ähnlichkeit ihres Informationsinhaltes einen voneinander unabgegrenzten gemeinsamen Darstellungsbereich 23, 24 bzw. 22, 23, 24 bilden.

Die Trennmarkierungen 29 können je nach Sinngehalt des in den einzelnen Darstellungsbereichen 21, 22, 23, 24, 25, 26 oder Unterzeilen 21 a, 21 b bzw. Unterspalten 26 c, 26 d aufgezeigten Informationsinhaltes bedarfsweise temporär oder dauerhaft zur Anzeige gebracht sein.

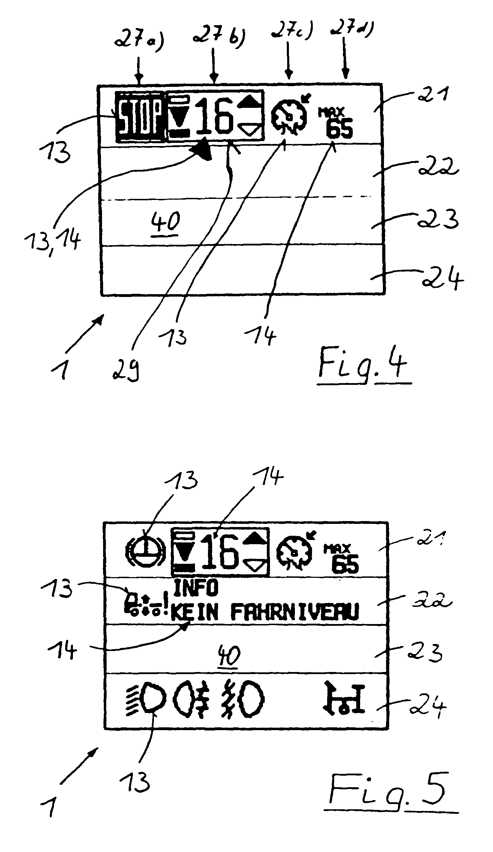

In Fig. 4 ist der gesamte Darstellungsraum des zentralen Displays 1 in zeilenartig untereinander angeordneter einzelnen Darstellungsbereichen 21, 22, 23, 24 unterteilt. Gemäß einer anderen hier nicht gezeigten Ausführungsvariante kann der Darstellungsraum 40 in weitere Darstellungsbereiche unterteilbar sein, welche gegebenenfalls anstelle einer Zeilenausführung in einer Spaltenausführung ausgeführt sind. Der hier ausgeführte Darstellungsraum 40 ist für das gegebenenfalls gleichzeitige Aufzeigen von beispielsweise vier unterschiedlichen Informationsbereichen bereitgestellt, wobei während des Aufzeigens von diversen Informationsinhalten die einzelnen Darstellungsbereiche 21, 22, 23, 24 durch eine Trennmarkierung, beispielsweise eine zusätzliche Trennlinie 29 (Fig. 6) abgrenzbar sind. Das in Fig. 4 gezeigte Ausführungsbeispiel zeigt ein in einem Normalbetrieb befindlichen Display 1, in dessen Darstellungsraum 40 ein erster Darstellungsbereich 21 ausschließlich für das kontinuierliche Aufzeigen autonom anzeigefähiger, vom Fahrer mittels der Bedienvorrichtung 2 unbeeinflussbarer Informationsinhalte 20 (Fig. 1) reserviert ist. Dieser erste Darstellungsbereich 21 ist in vorteilhafterweise in einer obersten Zeilenanordnung des Darstellungsraumes 40 angeordnet und kann somit vom Fahrer am besten im Blick behalten werden.

Die Reservierung des ersten Darstellungsbereiches 21 als oberste Zeilenanordnung im Darstellungsraum 40 ist in vorteilhafterweise bei allen weiteren, sämtlichen Betriebsarten des zentralen Displays für das Aufzeigen fahrzeugrelevanter Informationsinhalte 20 reserviert. Gemäß eines anderen hier nicht gezeigten Ausführungsbeispieles ist es auch möglich, bei spaltenweiser Anordnung der einzelnen Darstellungsbereiche 25, 26 das Aufzeigen fahrzeugrelevanter Informationsinhalte in einem ersten Spaltenbereich oder eines anderen Bereiches des gesamten Darstellungsraumes 40 für sämtliche Betriebsarten des zentralen Displays 1 zu reservieren, um ebenfalls hierdurch eine erhöhte Aufmerksamkeitspriorität zu erzielen.

Das in Fig. 4 gezeigte Ausführungsbeispiel weist also im obersten Darstellungsbereich 21 des Darstellungsraumes 40 diverse Symbole 13 sowie Text und/oder Zahlen 14 auf, welche auf verschiedenen Darstellungsplätzen (27a), (27b), (27c), (27d) usw. ihre feste Position besitzen und weder durch eine geänderte Betriebsartwahl des Displays 1 noch durch eine Betätigung des Bedienstellers 4 beeinflussbar ist.

Die fahrzeugrelevanten, vom Fahrer mittels der Bedienvorrichtung 2 unbeeinflussbaren Informationsinhalte können beispielsweise durch eine Stopp-Kennzeichnung, Dauerbremsanzeige, Retarderstufenwahl, Motorbremseingriff, Retardereingriff, Ganganzeige für Handschaltgetriebe, automatisiertes Schaltgetriebe, Automatikgetriebe, Tempomatanzeige, Bremsomatanzeige, Fahrzeug-Geschwindigkeitsregler, abstandsgeregelter Tempomat und dergleichen vorgesehen sein. Gegebenenfalls kann ein temporäres Aufzeigen weiterer, von der Bedienungsvorrichtung 2 unbeeinflussbarer fahrzeugrelevanter Informationsinhalte auf den einzelnen Darstellungsplätzen 27 des obersten Darstellungsbereiches 21 aufzeigbar sein. Hierzu können entweder der gesamte Darstellungsbereich 21 oder nur einzelne Darstellungsplätze 27 a, b, c, d des Darstellungsbereiches 21 autonom rollieren, so dass zeitlich nacheinander verschiedene Informationsinhalte im Darstellungsbereich 21 aufzeigbar sind. Diese Informationsinhalte wechseln je nach Funktionszustand des Fahrzeuges.

In Fig. 5 sind weitere Darstellungsbereiche 22, 23, 24 zusätzlich zu dem obersten Darstellungsbereich 21 genutzt. Das zentrale Display 1 befindet sich ebenfalls in einem Normalbetrieb, wobei ein zweiter Darstellungsbereich 22 einen aus Symbolen 13 und einem Text 14 bestehenden Warnhinweis anzeigt. Ein vierter Darstellungsbereich 24 zum Aufzeigen fahrzeugrelevanter Informationsinhalte mittels Symbolen 13 ohne zusätzlichem Texthinweis genutzt. Die im zweiten Darstellungsbereich 22 aufzeigbaren Informationsinhalte wie beispielsweise Hinweise, Warnungen und dergleichen können bei gleicher Prioritätsklasse autonom rollierend zur Anzeige bringbar sein. Des weiteren können anzeigbare Informationsinhalte desselben Prioritätsgrades auf bestimmten Darstellungsplätzen in zeitlichem Abstand versetzt darstellbar (rollieren) sein. Der in diesem Ausführungsbeispiel vierte Darstellungsbereich 24 ist zur Darstellung von Symbolen 13 ohne Texthinweis nutzbar, wobei diese Symbole 13 autonom rollieren können, falls mehr Symbole 13 als vorhandene Darstellungsplätze 27 im Darstellungsbereich 24 vorgesehen sind. Der dritte Darstellungsbereich 23 ist in dem hier gezeigten Ausführungsbeispiel vorläufig nicht genutzt, kann jedoch bedarfsweise optional ergänzend für die Darstellung von Symbolen 13 gemäß des Darstellungsbereiches 24 genutzt werden, wie in Fig. 7 dargestellt. Des weiteren ist es auch möglich, den dritten Darstellungsbereich 23 bei Normalbetrieb des zentralen Displays 1 zur Anzeige eines aktivierten Radios 7 oder anderer, gegebenenfalls mehrerer Geräte 6, 8, 9 (Fig. 1) zu nutzen, wie beispielsweise in Fig. 6 gezeigt.

Der in Fig. 6 mit aufgeführte dritte Darstellungsbereich 23 ist von seinen benachbarten Darstellungsbereichen 22, 24 mittels einer zusätzlichen Trennlinie 29 optisch wirkungsvoll abgetrennt. Das Aktiviertsein des Radios wird durch ein entsprechendes Symbol 13 sowie durch Angaben von Text 14 (Sendemamen, Einstellpositionen des Radios) angezeigt. Die Einstellpositionen des Radios 7 sind auf diversen Darstellungspositionen 28 angezeigt.

In Fig. 8 ist der Darstellungsraum 40 eines im Normalbetrieb befindlichen zentralen Displays 1 in allen Darstellungsbereichen 21, 22, 23, 24 mit der Darstellung diverser Informationsinhalte voll belegt. Dabei ist der zum Aufzeigen fahrzeugrelevanter Informationsinhalte wie Warnungen und Hinweise vorgesehene Darstellungsbereich 22 optisch durch eine zusätzliche Trennlinie 29 von den darunter befindlichen Darstellungsbereichen 23, 24 abgetrennt. Die unteren Darstellungsbereiche 23, 24 sind ausschließlich zur Darstellung fahrzeugrelevanter Informationsinhalte mittels Symbole 13 vorgesehen.

In Fig. 9 ist ein in einem Menübetrieb "Fahrzeug-Funktionsdaten" befindliches zentrales Display 1 gezeigt, dessen gesamter Darstellungsraum 40 - ausschließlich seines Darstellungsbereiches 21 - zum Aufzeigen fahrzeugspezifischer Informationsinhalte nutzbar ist. Der Menübetrieb "Fahrzeug-Funktionsdaten" des zentralen Displays 1 ist durch Druckbetätigjung des hier nicht gezeigten Bedienschalters 36 anwählbar. Somit ist das Hauptmenü "Fahrzeugdaten" angewählt, aus diesem weitere Untermenüs mittels Drehbetätigung des Bedienstellers 4 anwählbar sind. In dem hier gezeigten Ausführungsbeispiel ist das Untermenü "Bremsbeläge" mittels des im Darstellungsraum 40 bewegbaren Auswahlmarkierung 12 anwählbar und mittels Druckbetätigung des Bedienstellers 4 funktionsauslösbar ist. Zur Anzeige des Hauptmenüs "Fahrzeugdaten" sind sämtliche Darstellungsbereiche 22, 23, 24 unterhalb des für autonome Informationsinhalte reservierten Darstellungsbereiches 21 genutzt. Mittels des Bedienstellers 4 können zusätzlich zum Abruf von Fahrzeugdaten auch diverse Konfigurationseinstellungen bei diversen Fahrzeugfunktionen oder gegebenenfalls hiermit in Wirkverbindung stehenden Fahrzeuggeräten vorgenommen werden.

Die Auswahlmarkierung 12 im zentralen Display 1 ist hier durch eine farbinverse Darstellung des angewählten Informationsinhaltes gegeben. Gemäß eines hier nicht gezeigten Ausführungsbeispieles kann die Darstellung der Auswahlmarkierung durch verschiedene, andere Markierungen optisch hervorgehoben werden, wie beispielsweise einer hervorgehobenen Schriftart, einer speziellen Umrandung, eine Aufblinkfunktion oder dergleichen hervorgehoben sein.

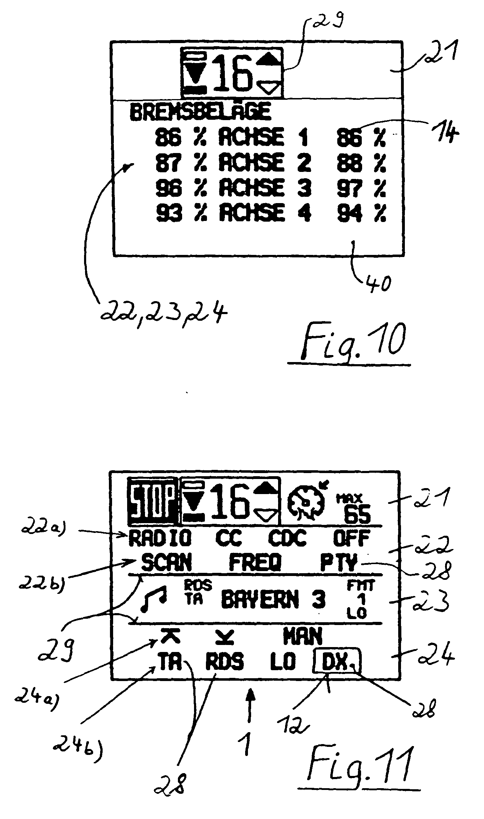

In Fig. 10 sind die unteren Darstellungsbereiche 22, 23, 24 des Darstellungsraumes 40 zum Aufzeigen der in dem Untermenü "Bremsbeläge" hinterlegten und mittels des Bedienstellers 4 aufgerufenen Informationsinhalte vorgesehen.

In Fig. 11 sind die Darstellungsbereiche 22, 23, 24 ausschließlich zur Darstellung eines in einem Menübetrieb "Radiofunktionen" aufzeigbarer, komfortbezogener Informationsinhalte genutzt. Dabei ist vorzugsweise der dritte Darstellungsbereich 23 für das Aufzeigen des Sendernamens und des Signals "Radio ein" (Notensymbol) reserviert und durch eine von den übrigen Darstellungsbereichen 22, 24 durch eine zusätzliche, optisch wirksame Trennlinie 29 getrennt. In diesem Ausführungsbeispiel sind die Darstellungsbereiche 22, 24 in zusätzliche Unterzeilen 22a, 22b, 24a, 24b unterteilt, welche jede für sich weitere Untermenü-Ebenen optisch aufführt. Diese Untermenü-Ebenen zeigen wiederum auf verschiedenen Darstellungspositionen 28 mittels des Bedienstellers 4 auswählbare und auslösbare Untermenüs auf, die mittels der Auswahlmarkierung 12 ansteuerbar sind.

Die vorzugsweise vorgenommene Reservierung des dritten Darstellungsbereiches 23 beispielsweise für die Darstellung der Funktion "Radio ein" (Betriebszustand des Radios oder gegebenenfalls anderer Geräte) sowie für das Aufzeigen des Sendernamens und weiterer diesbezüglicher Informationsinhalte kann für sämtliche Betriebsarten des zentralen Displays 1 in unveränderter Positionierung der betreffenden Informationsinhalte beibehalten werden, womit dem Fahrer ein optisch beruhigtes Erscheinungsbild des Displays 1 angeboten ist.

Analog zum Radiobetrieb können auch andere Geräte, wie beispielsweise CD-Spieler, Kassettenrecorder, CD-Wechsler, Telefongerät, Klimasystem, Heizungssystem etc. mittels der Bedienvorrichtung 2 angesteuert bzw. bedient und innerhalb des Displays 1 mit ihren Informationsinhalten angezeigt werden.

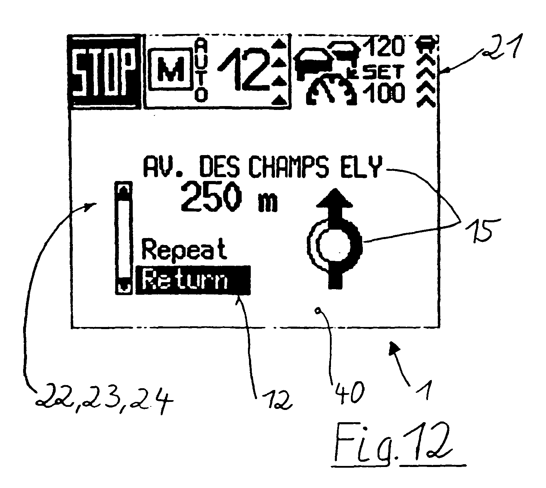

In Fig. 12 ist ein Darstellungsraum 40 eines in einem Grafikbetrieb befindlichen zentralen Displays 1 in seinen Darstellungsbereichen 22, 23, 24 zum Aufzeigen eines aus einer komplexeren Grafik bestehenden Informationsinhaltes eines Navigationssystems 39 (Fig. 1) genutzt. Die Darstellungsbereiche 22, 23, 24 sind in dieser Sonderbetriebsart "Grafikbetrieb" des zentralen Displays 1 für das Aufzeigen der Informationen der durch das Navigationssystem 39 bereitgestellten Hinweise bzw. benötigten Einstellungen vorgesehen. Die Besonderheit dieses Sonderbetriebs "Grafikbetrieb" des Displays 1 besteht darin, dass sowohl die autonomen als auch die vom Fahrer ausgewählten Informationsinhalte des Navigationssystems 39 durch dieses dem Display-Rechner 5 eingegeben werden, wodurch die Darstellungsform dieser Informationsinhalte durch das Navigationssystem 39 im zentralen Display 1 vorgegeben sind. In vorteilhafterweise ist dabei der Anmutungscharakter dieser Darstellungsformen, welche aus komplexeren Grafiken 15 bestehen können, dem Anmutungscharakter der in anderen Betrieben des zentralen Displays 1 vorgesehenen Symbolen 13 sowie dem Text oder den Zahlen 14 angeglichen sind. Das Abrufen, Auswählen bzw. Einstellen diverser Informationsinhalte in diesem Grafikbetrieb des zentralen Displays 1 erfolgt wie in allen anderen Betriebsarten des zentralen Displays 1 über den Bediensteller 4. Eine Kennzeichnung der aktuellen Position der Auswahlmarkierung 12 im Darstellungsraum 40 sowie eine Menüauswahl zwecks weiterer Funktionsauslösungen erfolgt bevorzugt analog zu den in vorgenannten Ausführungsbeispielen erwähnten Vorgehensweisen.

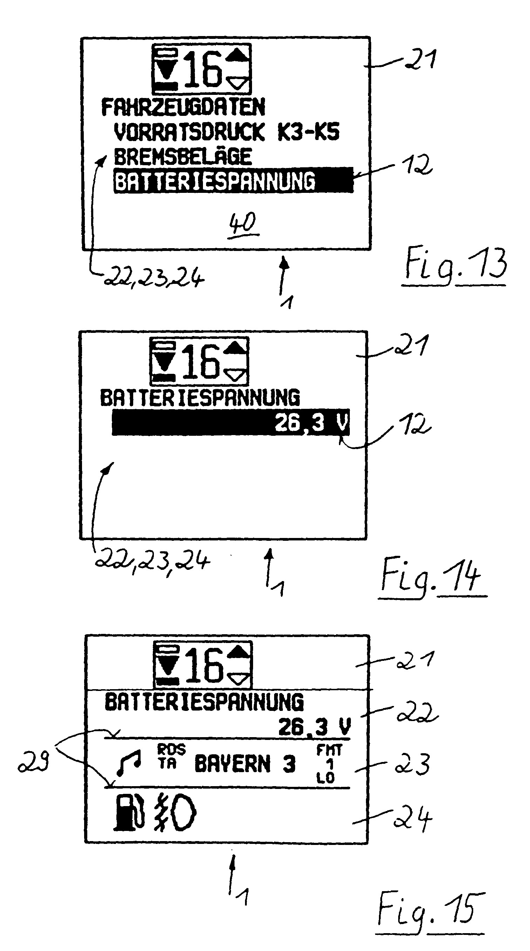

Die in den Figuren 13, 14, 15 dargestellten Einstellungen des zentralen Displays 1 zeigen exemplarisch diverse Darstellungen von Informationsinhalten, welche mittels der Auswahlmarkierung 12 beispielsweise in einem Sonderbetrieb des Displays 1 ausgewählt und durch Druckbetätigung des Bedienstellers 4 in eine sogenannte Monitor-Darstellung (Daueranzeiger) in einem Normalbetrieb des Displays 1 übernommen werden können. Da die wesentliche Grundbetriebsart des Displays 1 der Normalbetrieb ist, stellt die wenigstens temporäre Übernahme diverser, aus einem Sonderbetrieb des Displays 1, beispielsweise Menübetrieb "Fahrzeugdaten", oder Radiobetrieb oder Grafikbetrieb "Navigationssystem" stammender Informationsinhalte in ein im Normalbetrieb befindlichen Display eine besonders komfortable Option für den Fahrer dar.

Das in Fig. 13 dargestellte, zentrale Display 1 befindet sich im Hauptmenü "Fahrzeugdaten", welches durch Druckbetätigung des Bedienschalters 36 in den Darstellungsraum 40 des zentralen Displays 1 aufgerufen ist. Durch Anwahl des Untermenüs "Batteriespannung" mittels der Auswahlmarkierung 12 und dem Bediensteller 4 sowie deren Druckbetätigung sind betreffende Informationsinhalte dieses Untermenüs "Batteriespannung" aufrufbar (Fig. 14). Durch Anwahl eines dieser Betriebsdaten im Untermenü "Batteriespannung" mittels der Auswahlmarkierung 12 und dem Bediensteller 4 ist dieser Informationsinhalt überführbar in eine Dauerdarstellung (Monitorbetrieb) in einem Darstellungsbereich 22 des in Normalbetrieb befindlichen zentralen Displays.

Der Vorteil dieser Monitordarstellung bestimmter Fahrzeugdaten (Betriebdaten) im zentralen Display 1 während dessen Normalbetriebes besteht neben ihrer pragmatischen Bedeutung der Verfügbarkeit wichtiger Informationen auch in der Möglichkeit diese Informationsinhalte in dieser Monitordarstellung aktualisiert zu erhalten. Die Dauer der Monitordarstellung kann zeitlich begrenzt sein und ist, wie alle übrigen komfortbezogenen Informationsinhalte, bei Auftreten fahrzeugrelevanter Informationen (events) überblendbar bzw. verdrängbar. Die Monitordarstellung in dem zweiten Darstellungsbereich 22 kann solange aktualisiert aufgezeigt werden, solange keine neuen Ereignisse wie Texthinweise mit Symbol und dergleichen zur Darstellung anstehen. Die Monitordarstellung kann vorzugsweise in Kombination mit einer Symboldarstellung erfolgen. Die Datendarstellung kann in Zahlenform, in Balkenform bzw. Form eines beliebigen Diagramms erfolgen.

In Fig. 15 ist zusätzlich zur Monitordarstellung im Darstellungsbereich 22 im dritten Darstellungsbereich 23 der Informationsinhalt "Radiofunktion ein" sowie in einem vierten Darstellungsbereich 24 diverse fahrzeugbezogene Symbole zum Aufzeigen gebracht.

Die in diesem Ausführungsbeispiel gezeigte Monitordarstellung, die hier aus dem Hauptmenü "Fahrzeugdaten" ausgewählt und in einem im Normalbetrieb befindlichen Display 1 zur Daueranzeige gebracht wurde, können auch aus anderen Hauptmenüs wie beispielsweise "Radiobetrieb ein", "Telefonfunktion ein", "Navigationssystem", "Klimasystem", "Heizungssystem" und dergleichen ausgewählt und zur Daueranzeige in ein im Normalbetrieb befindlichen Displays 1 aufgezeigt werden.

## Patentansprüche

1. Einrichtung in einem Kraftfahrzeug, welche in einem primären Blick- und Bedienfeld des Fahrers angeordnet ist und zur bedarfsweise manuell durch den Fahrer auslösbaren, optischen Anzeige, Auswahl bzw. Beeinflussung fahrzeugrelevanter und/oder komfortbezogener Informationsinhalte (Signale, Hinweise, Warnungen, Handlungsempfehlungen, Geräteeinstellungen etc.) bzw. Gerätefunktionen vorgesehen ist, wobei
a) die Einrichtung wenigstens ein zentrales Display (1), einen zu deren Anzeigesteuerung vorgesehenen Display-Rechner (5) (oder gleichwertigen Rechner) sowie eine mit diesen korrespondierende Bedienvorrichtung (2) aufweist,
b) das zentrale Display (1) einen gemeinsamen Darstellungsraum (40) zum Aufzeigen diverser Informationsinhalte (20, 50) aufweist, welcher zwecks Aufzeigen voneinander verschiedener Informationsinhalte in voneinander separierbare Darstellungsbereiche (21, 22, 23, 24, 25, 26, 27) unterteilbar ist,
c) das zentrale Display (1) ist in voneinander verschiedenen Betriebsarten, nämlich in einem Normalbetrieb und in einem Sonderbetrieb (Menübetrieb, Grafikbetrieb etc.) durch entsprechende Betätigung der Bedienvorrichtung (2) betreibbar, und
d) bei einem Normalbetrieb des zentralen Displays (1) ist dessen gesamter Darstellungsraum für das Aufzeigen autonomer, vom Fahrer mittels der Bedienvorrichtung (2) unbeeinflussbarer Informationsinhalte (2) reserviert, sowie
e) bei einem Sonderbetrieb (Menübetrieb, Grafikbetrieb etc.) des zentralen Displays (1) ist dessen gesamter Darstellungsraum (40) für das Aufzeigen autonomer Informationsinhalte (20) und für das Aufzeigen veränderbarer, vom Fahrer mittels der Bedienvorrichtung (2) anforderbarer und/oder beeinflussbarer Informationsinhalte (50) reserviert, wobei mittels der Bedienvorrichtung (2) zusätzlich zur Anzeige im zentralen Display (1) diverse Funktionsoptionen (Bedienanforderungen) bei unterschiedlichen Geräten (Fahrzeugfunktionsgeräten (6), Radio (7), Telefon (8), Navigationssystem (9) , Klimasystem, Heizungssystem etc.) auslösbar sind,
**dadurch gekennzeichnet, dass** die in einem oder mehreren Darstellungsbereichen (21, 22, 23, 24, 25, 26, 27) aufgezeigten Informationsinhalte autonom in einem zeitlichen Abstand auf demselben Darstellungsplatz (27) anzeigbar sind.

2. Einrichtung nach Anspruch 1, **dadurch gekennzeichnet, dass** die mittels der Bedienvorrichtung (2) auslösbaren Funktionsoptionen (Bedienanforderungen) bei Geräten (6, 7, 8, 9) vorzugsweise von der Bedienvorrichtung über den Display-Rechner (5) (oder gleichwertigen Rechnern) an einen Zielrechner (16, 17, 18, 19) des jeweils funktionsangeforderten Gerätes (Fahrzeugfunktionsgeräte (6), Radio (7), Telefon (8), Navigationssystem (9), Klimasystem, Heizungssystem etc.) ausgebbar sind, wobei mittels des jeweiligen Zielrechners (16, 17, 18, 19) des betreffenden Gerätes (6, 7, 8, 9) eine bei letzterem wunschgemäß ausgelöste Funktionsänderung über den Display-Rechner (5) am zentralen Display (1) als veränderter Informationsinhalt zur Anzeige bringbar ist.

3. Einrichtung nach der Ansprüche 1 und 2, **dadurch gekennzeichnet, dass** das der Einrichtung zugehörige, zentrale Display (1) fest in einer im primären Blickfeld des Fahrers befindlichen Armaturentafel installiert ist, und dass die der Einrichtung zugehörige Bedienvorrichtung (2) in einem behinderungsfreien, primären Bedienfeld des Fahrers angeordnet und ohne dessen Positionsveränderung mit einer Hand funktionssicher bedienbar ist.

4. Einrichtung nach einem oder mehreren der vorangegangenen Ansprüche 1 bis 3, **dadurch gekennzeichnet, dass** bei Normalbetrieb des zentralen Displays (1) in dessen gesamten Darstellungsraum (40) vorzugsweise fahrzeugrelevante Informationsinhalte (20) und optional in hierfür reservierbaren, separaten Darstellungsbereichen (23, 25) des zentralen Displays (1) komfortbezogene Informationsinhalte (50) aufzeigbar sind, und dass bei Sonderbetrieb (Menübetrieb, Grafikbetrieb etc.) des zentralen Displays (1) vorzugsweise komfortbezogene Informationsinhalte (50) in den einzelnen Darstellungsbereichen (22, 23, 24, 26) des zentralen Displays (1) aufzeigbar sind.

5. Einrichtung nach einem oder mehreren der vorangegangenen Ansprüche 1 bis 4, **dadurch gekennzeichnet, dass** bei sämtlichen Betriebsarten des zentralen Displays (1) innerhalb dessen gesamten Darstellungsraumes (40) wenigstens ein separater, erster Darstellungsbereich (21) für das kontinuierliche Aufzeigen ausschließlich autonom anzeigefähiger, vom Fahrer mittels der Bedienvorrichtung (2) unbeeinflussbarer, fahrzeugrelevanter Informationsinhalte (20) reserviert ist.

6. Einrichtung nach Anspruch 5, **dadurch gekennzeichnet, dass** der wenigstens eine erste Darstellungsbereich (21) vorzugsweise im obersten Bereich des gesamten Darstellungsraumes (40) des zentralen Displays (1) angeordnet ist.

7. Einrichtung nach einem oder mehreren der vorangegangenen Ansprüche 1 bis 6, **dadurch gekennzeichnet, dass** bei Normalbetrieb des zentralen Displays die Informationsinhalte (20) fahrzeugrelevanter Anzeigen, vorzugsweise dauerhaft und gegebenenfalls im gesamten Darstellungsraum (40) des zentralen Displays (1) aufzeigbar sind, und dass bei Normalbetrieb des zentralen Displays (1) bedarfsweise die Informationsinhalte (50) komfortbezogener Anzeigen von Geräten (Fahrzeugfunktionsgeräte (6), Radio (7), Telefon (8), Navigationssystem (9), Klimasystem, Heizungssystem etc.) optional ausschnittsweise und/oder temporär in hierfür reservierbaren Darstellungsbereichen (23, 26) des zentralen Displays (1) aufzeigbar sind.

8. Einrichtung nach einem oder mehreren der vorangegangenen Ansprüche 1 bis 7, **dadurch gekennzeichnet, dass** die Bedienvorrichtung im wesentlichen aus mehreren, druckbetätigbaren Bedienschaltem (3) zur bedarfsweisen Anwahl des Normalbetriebs oder der optionalen Sonderbetriebsarten (Menübetrieb, Grafikbetrieb etc.) des zentralen Displays (1) sowie aus einem einzelnen, dreh- und druckbetätigbaren, mit einer Auswahlmarkierung (12) im zentralen Display (1) korrespondierenden Bediensteller (4) besteht, und dass mittels der Bedienschalter (3) - unabhängig von der jeweiligen Betriebsart des Displays (1) zusätzlich verschiedene Menüwechselfunktionen, wie beispielsweise "Menü-Ausstieg" (Verlassen-Taste 33), "Menüebenen-Anwahl" (Rücksprung-Taste 34) etc. anwählbar sind, und dass mittels des Bedienstellers (4) bei dessen Drehbetätigung eine örtliche Verstellung der Auswahlmarkierung (12) im Display (1) auslösbar ist, wodurch gegebenenfalls weitere Anzeige-und/oder Funktionsoptionen (Untermenüs) anbietbar und per Druckbetätigung des Bedienstellers (4) auslösbar sind.

9. Einrichtung nach einem oder mehreren der vorangegangenen Ansprüche 1 bis 8, **dadurch gekennzeichnet, dass** für die gesamte Betriebsdauer der Einrichtung - unabhängig von deren Betriebsart - bei einer entsprechenden Funktionsoptionsauswahl (Untermenüauswahl) am Bediensteller (4) entweder bei konventionell per Hand aktiviertem Gerät (6, 7, 8, 9) (Radio, Telefon etc.) oder bei mittels Bedienschalter (35, 36, 37, 38, 39) aktiviertem Gerät (6, 7, 8, 9) (Radio, Telefon etc.) ein separater, positionskonstanter zweiter Darstellungsbereich (23, 26) im Darstellungsraum (40) des zentralen Displays (1) für das Aufzeigen diesbezüglicher Informationsinhalte (50), wie beispielsweise Sendername, Telefongesprächsteilnehmer-Name, Telefongesprächsteilnehmer-Nummer etc. reserviert bleibt, falls keine fahrzeugrelevanten Informationsinhalte (events) (20) zum Aufzeigen im Display (1) anstehen.

10. Einrichtung nach einem oder mehreren der vorangegangenen Ansprüche 1 bis 9, **dadurch gekennzeichnet, dass** der Bediensteller (4) in bestimmten, aufeinanderfolgenden Drehwinkelpositionen einstellbar ist, wobei die Auswahlmarkierung (12) im zentralen Display (1) schrittweise zu jeweiligen Darstellungsplätzen (Menüeinträgen) (27a, 27b, 27c, 27d) bewegbar ist, und dass die Bewegungsrichtung der Auswahlmarkierung (12) im zentralen Display (1) von der Drehrichtung des Bedienstellers (4) abhängig ist.

11. Einrichtung nach einem oder mehreren der vorangegangenen Ansprüche 1 bis 10, **dadurch gekennzeichnet, dass** ein Zeilenwechsel der Auswahlmarkierung (12) von einem Ende einer Zeile (21 a) zum Anfang der nächstfolgenden Zeile (21 b) einer oder mehrerer Darstellungsbereiche (21, 22, 23, 24) durch Drehung des Bedienstellers (4) in eine erste Richtung, insbesondere nach rechts und ein Zeilenwechsel der Auswahlmarkierung (12) vom Anfang einer Zeile (23b) zum Ende einer vorhergehenden Zeile (23a) durch Drehen des Bedienstellers (4) in eine zweite Richtung, insbesondere nach links gesteuert ist.

12. Einrichtung nach einem oder mehreren der vorangegangenen Ansprüche 1 bis 11, **dadurch gekennzeichnet, dass** bedarfsweise voneinander abzugrenzende Darstellungsbereiche (22, 23) im Darstellungsraum (40) des zentralen Displays (1) durch Trennmarkierungen (23), beispielsweise zusätzliche Trennlinien, Umrandungen oder dergleichen optisch voneinander abgrenzbar sind, und dass einander benachbarte Darstellungsbereiche (23, 24, 25, 26) innerhalb des Darstellungsraumes (40) des zentralen Displays (1) bei Ähnlichkeit ihres Informationsinhaltes einen voneinander unabgegrenzten gemeinsamen Darstellungsbereich bilden.

13. Einrichtung nach einem oder mehren der vorangegangenen Ansprüche 1 bis 12, **dadurch gekennzeichnet, dass** die einzelnen Darstellungsbereiche (21, 22, 23, 24, 25, 26) des gesamten Darstellungsraumes (40) des zentralen Displays (1) zeilenartig und/oder spaltenartig ausgebildet sind, und aus einzelnen, aneinandergrenzenden Darstellungsplätzen (27a, 27b, 27c, 27d) bestehen, und dass die einzelnen Darstellungsbereiche (21, 22, 23, 24, 25, 26) durch weitere, gegebenenfalls für das Aufzeigen zusätzlicher Menüebenen vorgesehener Unterzeilen/Unterspalten (26c, 26d) mit hierin anordbaren, separaten Darstellungspositionen (28) unterteilbar sind.

14. Einrichtung nach einem oder mehreren der vorangegangenen Ansprüche 1 bis 13, **dadurch gekennzeichnet, dass** bei Normalbetrieb des zentralen Displays (1) bei Verzicht zusätzlicher Darstellungen komfortbezogener Informationsinhalte (50) (Radio, Telefon etc.) sämtliche Darstellungsbereiche (21, 22, 23, 24, 25, 26) des Displays (1) zum Aufzeigen autonom rollierender Informationsinhalte (20) (Symbole, Warnungen, Hinweise, Handlungsempfehlungen oder dergleichen) nutzbar sind.

15. Einrichtung nach einem oder mehreren der vorangegangenen Ansprüche 1 bis 14, **dadurch gekennzeichnet, dass** mittels jedes Bedienschalters (3) eine Anzeige im Display (1) und gegebenenfalls eine Funktion eines fahrzeuginternen Gerätes (6, 7, 8, 9) auslösbar ist, wobei jeweils ein definierter Bedienschalter (35, 36, 37, 38, 39) für die Anwahl und Auslösung einer einzelnen Hauptfunktion (Hauptmenü) wie beispielsweise "Fahrzeugfunktionen" (6), "erweitere Radiofunktion" (7), "erweiterte Telefonfunktion" (8), "Navigationsfunktion" (9), "Klimatisierungssystem", "Heizungssystem" und dergleichen weiterer Fahrzeugfunktionen bzw. fahrzeugfremder Funktionen sowie weitere Bedienschalter (33, 34) für die Auslösung weiterer Funktionen wie beispielsweise "Menü-Ausstieg" (Verlassen-Taste) (33), "Menüebenen-Anwahl" (Rücksprung-Taste (34) etc.) reserviert ist.

16. Einrichtung nach einem oder mehreren der vorangegangenen Ansprüche 1 bis 15, **dadurch gekennzeichnet, dass** zusätzlich zum Abruf der Hauptfunktionen (Hauptmenüs) der fahrzeuginternen Geräte (6. 7. 8. 9) mittels der Bediensteller jeweils weitere, funktionsverwandte Geräte, beispielsweise zusätzlich zu einem Radio (7) weitere CDSpieler, CD-Wechsler oder Kassettenrecorder, und beispielsweise zu einem Telefon (8) - weiters ein Telefax etc. - aufrufbar und bedienbar sind.

17. Einrichtung nach einem oder mehreren der vorangegangenen Ansprüche 1 bis 16, **dadurch gekennzeichnet, dass** bei Sonderbetrieb (Menübetrieb, Grafikbetrieb etc.) des zentralen Displays (1) zusätzlich zu einem hierfür reservierten zweiten Darstellungsbereich (23) weitere, diesen ergänzende Darstellungsbereiche (22, 24) zum Aufzeigen in den Hauptmenüs ("Radiofunktion", "Telefonfunktion"', "Navigationsfunktion", "Fahrzeugfunktionen", "Klimatisierungsfunktionen, "Heizungsfunktionen" etc.) aufrufbarer Informationsinhalte (50) beanspruchbar ist.

18. Einrichtung nach einem oder mehreren der vorangegangenen Ansprüche 1 bis 17, **dadurch gekennzeichnet, dass** die Auswahlmarkierung (12) im zentralen Display (1) durch eine umgebungskonträre Darstellung, selbstbezüglich oder bezüglich ihres Hintergrundes optisch hervorgehoben ist.

19. Einrichtung nach einem oder mehreren der vorangegangenen Ansprüche 1 bis 18, **dadurch gekennzeichnet, dass** bei Auftreten gegebenenfalls geänderter Fahrzeugbedingungen (events) ein Aufzeigen prioritätsniedrigerer Informationsinhalte im Display (1), beispielsweise komfortbezogener Informationsinhalte (50) durch ein Aufzeigen fahrzeugspezifischer, prioritätshöherer (Warnungen, Hinweise etc.) Informationsinhalte (20) überblendbar sind, und dass diese Informationsinhalte (20) gegebenenfalls zusätzlich und zeitgleich in benachbart zum zentralen Display (1) angeordneten Kontrollleuchten in der Armaturentafel anzeigbar sind.

20. Einrichtung nach einem oder mehreren der vorangegangenen Ansprüche 1 bis 19, **dadurch gekennzeichnet, dass** das Aufzeigen prioritätshöherer Informationsinhalte (Warnungen, Hinweise etc.) (20) im zentralen Display (1) und gegebenenfalls in den hierzu benachbarten Kontrollleuchten mit erhöhter Anzeigedauer und/oder mit markantem Farbkontrast ausführbar ist, und dass der jeweilige Prioritätsgrad dieser aufgezeigten Informationsinhalte (20) mittels spezifischer Farbsymbolik anzeigbar ist.

21. Einrichtung nach einem oder mehreren der vorangegangenen Ansprüche 1 bis 20, **dadurch gekennzeichnet, dass** die Darstellung prioritätsgleicher Informationsinhalte im Display turnusmäßig wiederholt (Autorollieren) aufzeigbar ist.

22. Einrichtung nach einem oder mehreren der vorangegangenen Ansprüche 1 bis 21, **dadurch gekennzeichnet, dass** die im Sonderbetrieb (Menübetrieb, Grafikbetrieb etc.) des Displays (1) aufzeigbaren Informationsinhalte (50) bedarfsweise mittels des druck-und drehbetätigbaren Bedienstellers (4) und der Auswahlmarkierung (12) im Display (1) anwählbar und bei Druckbetätigung des Bedienstellers (4) in den Status einer Monitoranzeige (Daueranzeige) in einen im Normalbetrieb des Displays (1) befindlichen Darstellungsbereich (23) wenigstens temporär überführbar sind.

23. Einrichtung nach einem oder mehreren der vorangegangenen Ansprüche 1 bis 22, **dadurch gekennzeichnet, dass** die Anzahl möglicher im zentralen Display (1) aufzeigbarer Informationsinhalte (20, 50) gegebenenfalls größer ist als die Anzahl der im gesamten Darstellungsraum (40) des zentralen Displays (1) vorhandenen Darstellungsplätze (23), wobei die quasi in Warteposition befindlichen Informationsinhalte (20, 50) gegebenenfalls mittels der Bedienvorrichtung (2) abrufbar und/oder in den einzelnen Darstellungsbereichen (21, 22, 23, 24, 25, 26) des zentralen Displays (1) autonom rollierend - gegebenenfalls synchronrollierend - aufzeigbar sind.

24. Einrichtung nach einem oder mehreren der vorangegangenen Ansprüche 1 bis 23, **dadurch gekennzeichnet, dass** bei Normalbetrieb und bei Menübetrieb des zentralen Displays (1) vorzugsweise der Display-Rechner (Anzeigensteuerung) (5) die grafische Gestaltung der im zentralen Display (1) aufzeigbarer Informationsinhalte (20, 50) vorgibt, und dass bei Grafikbetrieb des zentralen Displays vorzugsweise das gegebenenfalls vorgesehene Gerät (9) (Navigationssystem, Klimasystem etc.) bzw. dessen Zielrechner (19) die grafische Gestaltung der im zentralen Display (1) aufzeigbaren Informationsinhalte (20, 50) vorgibt, und dass bei sämtlichen Betriebsarten (Normalbetrieb, Sonderbetrieb) des zentralen Displays (1) die grafische Gestaltung der im zentralen Display (1) aufzeigbaren Informationsinhalte (20, 50) vorzugsweise einen vereinheitlichten Anmutungscharakter aufweisen.

25. Einrichtung nach einem oder mehreren der vorangegangenen Ansprüche 1 bis 24, **dadurch gekennzeichnet, dass** bei der Bedienvorrichtung (2) die zur Auswahl von einzelnen Menüebenen vorgesehenen Bedienschalter (33, 34) vorzugsweise oberhalb des Bedienstellers (4) und die zur Auswahl der Hauptmenüs (Hauptfunktionen der Geräte) vorgesehenen Bedienschalter (35, 36, 37, 38, 39) vorzugsweise in einem Bereich rechts oder links neben dem Bediensteller (4) spaltenartig untereinander angeordnet sind, und dass der Bediensteller (4) sowie alle Bedienschalter (3) sämtlich ohne weitere Positionsveränderungen von einer Bedienhand ergonomisch optimiert erreichbar und funktionssicher bedienbar sind.

26. Einrichtung nach einem oder mehreren der vorangegangenen Ansprüche 1 bis 25, **dadurch gekennzeichnet, dass** nach Sonderbetrieb (Menübetrieb, Grafikbetrieb etc.) des zentralen Displays (1) eine Rückkehr zu einem Normalbetrieb des zentralen Displays (1) entweder
a) durch Betätigung des Bedienschalters "Menü-Ausstieg" (Verlassen-Taste) (33) oder
b) vorzugsweise selbstständig durch Nichtbetätigung des Bedienstellers (4) nach einem definierten Zeitablauf (Zeitrücksprung) - ausgenommen bei Grafikbetrieb des Navigationssystems (9) - oder
c) selbstständig durch Verdrängung momentan aufgezeigter Informationsinhalte (50) des Sonderbetriebs (Menübetrieb, Grafikbetrieb etc.) durch aktuell aufgezeigtefahrzeugrelevante Informationsinhalte (events) (20) eines gegebenenfalls höheren Prioritätsgrades auslösbar ist.

27. Einrichtung nach einem oder mehreren der vorangegangenen Ansprüche 1 bis 26 **dadurch gekennzeichnet, dass** nach erfolgter Unterbrechung des Sonderbetriebs des Displays (1) - infolge einer aktuellen Einblendung fahrzeugrelevanter Informationsinhalte (events) (20) - mittels der betreffenden Bedienschalter (3) der Bedienvorrichtung (2) ein Rückholen ursprünglicher Menüeinstellungen im Display (1) bzw. der Geräteeinstellungen gegeben ist (Wiedereintrittsfunktion).

## Claims

1. A device in a motor vehicle that is arranged in a primary field of vision and operation of the driver and is intended, as needed and manually initiated by the driver, for optical display, selection and influencing of vehicle-relevant and/or comfort- and convenience-related information content (signals, indications, warnings, recommendations for action, equipment settings, etc) and/or equipment functions, whereby
a) the device exhibits at least one central display (1), a display computer (5) (or equivalent computer) intended to control the messages in the display and an operating means (2) to correspond with them,
b) the central display (1) exhibits a common display space (40) to show different information content (20,50) that can be subdivided into separable display areas (21-27) to show said different information content,
c) the central display (1) can be operated in different modes, namely in a normal mode and a special mode (menu, graphics, etc), by appropriate actuation of the operating means (2),
d) in said normal mode the entire display space (40) of the central display (1) is reserved to show autonomous information content that the driver is unable to influence through the operating means (2), and
e) in said special mode (menu, graphics, etc) the entire display space (40) of the central display (1) is reserved to show autonomous information content (20) and to show alterable information content (50) that can be requested and/or influenced by the driver by the operating means (2), whereby the operating means (2) is, in addition to showing messages in the central display (1), able to initiate various functional options (operating requests) of different items of equipment (vehicle function units (6), radio (7), telephone (8), navigation system (9), climate control system, heating system, etc),
**characterised in that** the information content shown in one or more display areas (21-27) can be displayed autonomously at timed intervals in the same display space (27).

2. A device according to claim 1, **characterised in that** the functional options (operating requests) of items of equipment (6-9) that can be initiated by the operating means (2) are preferably output from the operating means (2) through the display computer (5) (or equivalent computer) to a target computer (16-19) of the particular item of equipment for the requested function (vehicle function units (6), radio (7), telephone (8), navigation system (9), climate control system, heating system, etc), whereby the particular target computer (16-19) of the item of equipment concerned (6-9) is able to produce an indication of the alteration initiated as requested in the function of the latter through the display computer (5) as altered information content on the central display (1).

3. A device according to claims 1 and 2, **characterised in that** the central display (1) of the device is firmly installed in an instrument panel in the primary field of vision of the driver and that the operating means (2) of the device is arranged in an unobstructed primary field of operation of the driver and can be operated securely in its function by one hand without the driver having to change position.

4. A device according to one or more of the foregoing claims 1 through 3, **characterised in that** in the normal mode of the central display (1) its entire display space (40) preferably shows vehicle-relevant information content (20) and optionally, in separate display areas (23,25) of the central display (1) that can be reserved for this purpose, comfort- and convenience-related information content (50), and that in the special mode (menu, graphics, etc) of the central display (1) its individual display areas (22-24,26) preferably show comfort- and convenience-related information content (50).

5. A device according to one or more of the foregoing claims 1 through 4, **characterised in that** in all operating modes of the central display (1) at least one separate, first display area (21) is reserved within the entire display space (40) to continuously show solely autonomous vehicle-relevant information content (20) that the driver is unable to influence through the operating means (2).

6. A device according to claim 5, **characterised in that** the at least one first display area (21) is preferably arranged in the uppermost region of the entire display space (40) of the central display (1).

7. A device according to one or more of the foregoing claims 1 through 6, **characterised in that** in the normal mode of the central display (1) the vehicle-relevant information content (20) is preferably shown continuously and possibly in the entire display space (40) of the central display (1), and that in normal mode of the central display (1) the comfort- and convenience-related information content (50) for different items of equipment (vehicle function units (6), radio (7), telephone (8), navigation system (9), climate control system, heating system, etc) is optionally shown in extracts and/or temporarily in display areas (23,26) of the central display (1) that can be reserved for this purpose.

8. A device according to one or more of the foregoing claims 1 through 7, **characterised in that** the operating means (2) consists essentially of multiple pressure-operated switches (3) for selection of the normal mode or the optional special mode (menu, graphics, etc) of the central display (1) as needed, and of a single rotatable and pressure-operated control (4), corresponding with a selection marker (12) on the central display (1), and that by means of the switches (3), irrespective of the operating mode of the central display (1), various menu change functions such as "Exit menu" (33), "Menu level" (34), etc can additionally be selected, and that the control (4) can be rotated to alter the location of the selection marker (12) on the central display (1), thereby possibly offering further display and/or functional options (submenus) that can be initiated by pressing the control (4).

9. A device according to one or more of the foregoing claims 1 through 8, **characterised in that** for the entire duration of operation of the device - irrespective of the operating mode - with an appropriate selection of functional options (submenus) at the control (4), either when items of equipment (6-9) (radio, telephone etc) are activated conventionally, i.e. manually, or by switches (35-39), a separate second display area (23,26) remains reserved and in position in the display space (40) of the central display (1) to show related information content (50) such as station name, call party name, call party number, etc if no vehicle-relevant information content (events) (20) is awaiting presentation on the central display (1).

10. A device according to one or more of the foregoing claims 1 through 9, **characterised in that** the control (4) can be rotated to certain consecutive positions whereby the selection marker (12) on the central display (1) can be moved in steps to the different locations (menu entries) (27a-27d) and that the direction in which the selection marker (12) moves on the central display (1) depends on the direction in which the control (4) is turned.

11. A device according to one or more of the foregoing claims 1 through 10, **characterised in that** a line change of the selection marker (12) from the end of one line (21 a) to the start of the next line (21 b) of one or more display areas (21-24) is controlled by turning the control (4) in a first direction, in particular to the right, and a line change of the selection marker (12) from the start of one line (23b) to the end of the previous line (23a) by turning the control (4) in a second direction, in particular to the left.

12. A device according to one or more of the foregoing claims 1 through 11, **characterised in that** display areas (22,23) that need to be demarcated from one another in the display space (40) of the central display (1) can be optically demarcated from one another by markings, e.g. additional dividing lines and margins etc, and that adjacent display areas (23-26) within the display space (40) of the central display (1) form a non-demarcated and shared display area in the event of similarity in their information content.

13. A device according to one or more of the foregoing claims 1 through 12, **characterised in that** the individual display areas (21-26) of the display space (40) of the central display (1) take the form of lines and/or columns and consist of single, adjacent display locations (27a-27d) and that the individual display areas (21-26) can be divided by further sublines/subcolumns (26c,26d) in which separate display items (28) are arranged, possibly provided to display additional menu levels.

14. A device according to one or more of the foregoing claims 1 through 13, **characterised in that** in the normal mode of the central display (1), if additional displays of comfort- and convenience-related information content (50) (radio, telephone, etc) are dispensed with, all display areas (21-26) of the central display (1) can be used to show autonomous rolling information content (20) (symbols, warnings, indicatios, recommendations for action, etc).

15. A device according to one or more of the foregoing claims 1 through 14, **characterised in that** each switch (3) can initiate a message on the central display (1) and possibly a function of an internal item of equipment (6-9) in the vehicle, whereby switches (35-39) are defined and reserved to select and initiate each main function (main menu), e.g. "Vehicle functions" (6), "Extended radio function" (7), "Extended telephone function" (8), "Navigation function" (9), climate control system, heating system and other functions in and extra to the vehicle, and further switches (33,34) to initiate other functions, e.g. "Exit menu" (33) and "Menu level" (34).

16. A device according to one or more of the foregoing claims 1 through 15, **characterised in that**, in addition to the main functions (main menu) of the items of vehicle equipment (6-9), the switches (3) can be used to select and operate other items of equipment related in their function, e.g. a CD player, CD changer or cassette recorder in addition to a radio (7), and a telefax in addition to a telephone (8).

17. A device according to one or more of the foregoing claims 1 through 16, **characterised in that** in the special mode (menu, graphics, etc) of the central display (1), in addition to a second display area (23) reserved for this purpose, further supplementary display areas (22,24) can be used to show information content (50) of the main menu (vehicle function units, radio, telephone, navigation, climate control, heating, etc).

18. A device according to one or more of the foregoing claims 1 through 17, **characterised in that** the selection marker (12) in the central display (1) is visually accentuated by contrast with its surroundings, within itself or in relation to its background.

19. A device according to one or more of the foregoing claims 1 through 18, **characterised in that** upon the possible occurrence of changed vehicle conditions (events), the display of information content of lower priority on the central display (1), e.g. comfort- and convenience-related information content (50), can be overridden by the display of vehicle-specific information content (20) of higher priority (warnings, indications, etc), and that said latter information content (20) can possibly be displayed additionally and simultaneously by check lamps adjacent to the central display (1) in the instrument panel.

20. A device according to one or more of the foregoing claims 1 through 19, **characterised in that** the display of information content (20) of higher priority (warnings, indications, etc) on the central display (1) and possibly by adjacent check lamps can be extended in duration and/or given pronounced colour contrast, and that the particular priority of the displayed information content (20) can be indicated by specific colours.

21. A device according to one or more of the foregoing claims 1 through 20, **characterised in that** the display of information content of the same priority on the central display (1) follows a repeating routine (autorolling).

22. A device according to one or more of the foregoing claims 1 through 21, **characterised in that** the information content (50) shown in the special mode (menu, graphics, etc) of the central display (1) may be selected by means of the rotatable and pressure-operated control (4) and the selection marker (12) in the central display (1) and, by pressing the control (4), transferred at least temporarily to a display area (23) as a monitor (continuous) display in the normal mode of the central display (1).

23. A device according to one or more of the foregoing claims 1 through 22, **characterised in that** the number of items of information content (20,50) that can possibly be shown on the central display (1) may be greater than the number of display areas (23) available in the entire display space (40) of the central display (1), whereby the information content (20,50) that is virtually queuing may be called up by the operating means (2) and/or shown in the individual display areas (21-26) of the central display (1) in autonomously rolling or possibly synchronously rolling form.

24. A device according to one or more of the foregoing claims 1 through 23, **characterised in that** in the normal mode and in menu mode of the central display (1) the display computer (message control) (5) preferably determines the graphical form of the information content (20,50) shown on the central display (1) and that in graphics mode of the central display (1) the item of equipment (9) (navigation system, climate control system, etc) that is possibly provided or its target computer (19) will possibly determine the graphical form of the information content (50) shown on the central display (1), and that in all modes (normal, special) of the central display (1) the graphical form of the information content (20,50) shown on the central display (1) preferably exhibits a uniform and attractive character.

25. A device according to one or more of the foregoing claims 1 through 24, **characterised in that** in the operating means (2) the switches (33,34) provided to select individual menu levels are preferably arranged above the control (4) and the switches (35-39) provided to select the main menus (main functions of the items of equipment) are preferably arranged in columns one under the other in a region to the right or left of the control (4) and that the control (4) and all switches (3) can be reached and operated, surely and in ergonomical fashion, with one hand and without further changes of position.

26. A device according to one or more of the foregoing claims 1 through 25, **characterised in that** a return to the normal mode of the central display (1) can, after the central display (1) has been in the special mode (menu, graphics, etc), be initiated either
a) by operation of the "Exit menu" switch (33),
b) preferably automatically by non-operation of the control (4) after a defined timeout, except in the graphics mode of the navigation system (9), or
c) automatically by overriding momentarily shown information content (50) of the special mode (menu, graphics, etc) with vehicle-relevant information content (events) (20) that is possibly of higher priority.

27. A device according to one or more of the foregoing claims 1 through 26, **characterised in that** after interruption of the special mode of the central display (1)to show overriding vehicle-relevant information content (events) (20) -- the particular switch (3) of the operating means (2) can be used to retrieve original menu settings on the central display (1) and/or restore unit setting (Resume function).

## Revendications

1. Installation dans un véhicule à moteur, disposée dans un champ de vision et de commande du chauffeur, et prévu pour l'affichage visuel, la sélection et l'influence de contenus d'information (signaux, instructions, avertissements, recommandations de manipulation, réglages d'appareil, etc.) et de fonctions d'appareil importantes pour le véhicule et/ou lié(e)s au confort pouvant être déclenchés manuellement par le chauffeur selon les besoins, auquel cas
a) l'installation présente au moins un écran d'affichage central (1), un ordinateur d'écran (5) prévu pour la commande de l'affichage sur l'écran (ou un ordinateur ayant des fonctions similaires) ainsi qu'un dispositif de commande (2) correspondant avec celui-ci,
b) l'écran d'affichage central (1) présente un espace de représentation (40) commun pour afficher divers contenus d'information (20, 50), qui peut être subdivisé en zones de représentation (21, 22, 23, 24, 25, 26, 27) séparables les unes des autres pour afficher des contenus d'information différents les uns des autres,
c) l'écran d'affichage central (1) peut être exploité dans des genres de fonctionnement différents les uns des autres, à savoir dans un mode de fonctionnement normal et dans un mode spécial (mode menu, mode graphique, etc.) par l'actionnement correspondant du dispositif de commande (2), et
d) dans un mode de fonctionnement normal de l'écran d'affichage central (1), son espace de représentation total (40) est réservé pour afficher des contenus d'information (20) autonomes, pas influençables par le chauffeur au moyen du dispositif de commande (2), ainsi que
e) dans un mode de fonctionnement spécial (mode menu, mode graphique, etc.) de l'écran d'affichage central (1), son espace de représentation total (40) est réservé pour afficher des contenus d'information (20) autonomes et pour afficher des contenus d'information (50) modifiables, pouvant être demandés et/ou influencés par le chauffeur au moyen du dispositif de commande (2), auquel cas il est possible de déclencher diverses options de fonction (demandes de commande) auprès d'appareils divers (appareils de fonction du véhicule (6), autoradio (7), téléphone (8), système de navigation (9), système de climatisation, système de chauffage, etc.) pour être affichées en supplément sur l'écran d'affichage central (1) au moyen du dispositif de commande (2),
**caractérisée en ce que** des contenus d'information affichés dans une ou plusieurs zones de représentations (21, 22, 23, 24, 25, 26, 27) peuvent être affichés de manière autonome sur un même emplacement de représentation (27) pendant une période de temps.

2. Installation selon la revendication 1, **caractérisée en ce que** les options de fonction (demandes de commande) déclenchables au moyen du dispositif de commande (2) sont transmises, dans le cas des appareils (6, 7, 8, 9), de préférence du dispositif de commande à un ordinateur cible (16, 17, 18, 19) de l'appareil respectif auquel la fonction est demandée (appareils de fonction du véhicule (6), autoradio (7), téléphone (8), système de navigation (9), système de climatisation, système de chauffage, etc.) via l'ordinateur de l'écran d'affichage (5) (ou un ordinateur similaire), auquel cas, au moyen de l'ordinateur cible (16, 17, 18, 19) de l'appareil concerné (6, 7, 8, 9), il est possible de modifier la fonction déclenchée comme souhaité dans ce dernier via l'ordinateur de l'écran d'affichage (5) pour un affichage sur l'écran d'affichage central (1) comme contenu d'information modifié.

3. Installation selon les revendications 1 et 2, **caractérisée en ce que** l'écran d'affichage central (1) faisant partie intégrante de l'installation est monté de manière fixe dans un tableau de bord se trouvant dans le champ de vision primaire du chauffeur, et **en ce que** le dispositif de commande (2) faisant partie intégrante de l'installation est disposé dans un champ de vision primaire non gêné du chauffeur et peut être piloté de manière sûre d'une seule main sans que le chauffeur modifie sa position.

4. Installation selon une ou plusieurs des revendications mentionnées précédemment 1 à 3, **caractérisée en ce qu'**en mode de fonctionnement normal de l'écran d'affichage central (1), des contenus d'information (20) de préférence importants pour le véhicule peuvent être affichés dans l'espace de représentation total (40) de l'écran et, en option, des contenus d'information (50) liés au confort peuvent être affichés dans des zones de représentation (23, 25) séparées, réservables pour cela, et **en ce qu'**en mode de fonctionnement spécial (mode menu, mode graphique, etc.) de l'écran d'affichage central (1), de préférence des contenus d'information (50) liés au confort peuvent être affichés dans chaque zone de représentation (22, 23, 24, 26) de l'écran d'affichage central (1).

5. Installation selon une ou plusieurs revendications mentionnées précédemment 1 à 4, **caractérisée en ce que**, dans tous les genres de mode fonctionnement de l'écran d'affichage central (1), au moins une première zone de représentation (21) séparée est réservé au sein de l'espace total de représentation (40) pour afficher continuellement des contenus d'information (20) affichables de manière exclusivement autonome, non influençables par le chauffeur au moyen du dispositif de commande (2) et importants pour le véhicule.

6. Installation selon la revendication 5, **caractérisée en ce qu'**au moins la première zone de représentation (21) est disposée de préférence dans la partie supérieure de l'espace total de représentation (40) de l'écran d'affichage central (1).

7. Installation selon une ou plusieurs revendications mentionnées précédemment 1 à 6, **caractérisée en ce qu'**en mode de fonctionnement normal de l'écran d'affichage central (1), les contenus d'information (20) des affichages importants pour le véhicule peuvent être affichés de préférence de manière permanente et, le cas échéant, dans l'espace total de représentation (40) de l'écran d'affichage central (1), et **en ce qu'**en mode de fonctionnement normal de l'écran d'affichage central (1), des contenus d'information (50) d'affichages liés au confort d'appareils (appareils de fonction du véhicule (6), autoradio (7), téléphone (8), système de navigation (9), système de climatisation, système de chauffage, etc.) peuvent si nécessaire être affichés en option de manière partielle et/ou temporaire dans les zones de représentations (23, 26) réservables pour cela de l'écran d'affichage central (1).

8. Installation selon une ou plusieurs revendications mentionnées précédemment 1 à 7, **caractérisée en ce que** le dispositif de commande (2) se compose pour l'essentiel de plusieurs contacteurs de commande (3) activables par pression pour sélectionner si nécessaire le mode de fonctionnement normal ou les genres de fonctionnement spéciaux en option (mode menu, mode graphique, etc.) de l'écran d'affichage central (1) ainsi que d'un seul régleur de commande rotatif et activable par pression, correspondant à un marquage de sélection (12) sur l'écran d'affichage central (1), et **en ce qu'**au moyen du contacteur de commande (3) - indépendamment du genre de fonctionnement de l'écran (1) -, différentes fonctions de commutation de menu supplémentaires telles que « Quitter le menu » (touche de sortie du menu 33), « Sélection du niveau de menu » (touche de retour 34) peuvent être sélectionnées, et **en ce qu'**un ajustage local du marquage de sélection (12) peut être déclenché sur l'écran (1) au moyen du régleur de commande (4) par un actionnement rotatif, permettant ainsi de proposer, le cas échéant, d'autres options d'affichage et/ou de fonction (sous-menus), et de les déclencher par pression sur le régleur de commande (4).

9. Installation selon une ou plusieurs revendications mentionnées précédemment 1 à 8, **caractérisée en ce que**, pendant toute la durée de service de l'installation - indépendamment de son genre de fonctionnement -, une deuxième zone de représentation (23, 26), dont l'emplacement reste constant dans l'espace de représentation (40) de l'écran d'affichage central (1), reste réservée pour afficher des contenus d'information telles que, par exemple, le nom de la station de radio, le nom de l'interlocuteur téléphonique, le numéro de l'interlocuteur téléphonique, etc. lors d'une sélection correspondante de l'option de fonction (sélection de sous-menus) sur le régleur de commande (4) soit avec un appareil (6, 7, 8, 9) (autoradio, téléphone, etc.) actionné conventionnellement à la main, soit avec un appareil (6, 7, 8, 9) (autoradio, téléphone, etc.) actionné au moyen de contacteurs de commande (35, 36, 37, 38, 39), au cas où aucun contenu d'information (événements) (20) importants pour le véhicule n'attendent pour être affichés sur l'écran (1).

10. Installation selon une ou plusieurs revendications mentionnées précédemment 1 à 9, **caractérisée en ce que** le régleur de commande (4) peut être réglé dans certaines positions se suivant selon un angle de rotation, auquel cas le marquage de sélection (12) peut être déplacé sur l'écran (1) de manière progressive par rapport aux différents emplacements de représentation (entrées de menu) (27a, 27b, 27c, 27d), et **en ce que** le sens de déplacement du marquage de sélection (12) sur l'écran d'affichage central (1) dépend du sens de rotation du régleur de commande (4).

11. Installation selon une ou plusieurs revendications mentionnées précédemment 1 à 10, **caractérisée en ce qu'**un changement de ligne du marquage de sélection (12) de la fin d'une ligne (21a) au début de la ligne suivante (21 b) d'une ou plusieurs zones de représentation (21, 22, 23, 24) est pilotable par la rotation du régleur de commande (4) dans un premier sens, en particulier vers la droite, et un changement de ligne du marquage de sélection (12) du début d'une ligne (23b) à la fin d'une ligne précédente (23a) est pilotable par la rotation du régleur de commande (4) dans un deuxième sens, en particulier vers la gauche.

12. Installation selon une ou plusieurs revendications mentionnées précédemment 1 à 11, **caractérisée en ce que**, si nécessaire, des zones de représentation (22, 23) à délimiter les unes des autres dans l'espace de représentation (40) de l'écran d'affichage central (1) peuvent être délimitées les unes des autres par des marquages de séparation (23), par exemple des lignes de séparation supplémentaires, des encadrements ou des symboles graphiques similaires, et **en ce que** des zones de représentation (23, 24, 25, 26) voisines les unes des autres au sein de l'espace de représentation (40) de l'écran d'affichage central (1) forment une zone de représentation commune non délimitée les unes des autres en cas de similitude dans le contenu des informations.

13. Installation selon une ou plusieurs revendications mentionnées précédemment 1 à 12, **caractérisée en ce que** les différentes zones de représentation (21, 22, 23, 24, 25, 26) de l'espace total de représentation (40) de l'écran d'affichage central (1) sont formées par ligne et/ou par colonne, et à partir de différents emplacements de représentation (27a, 27b, 27c, 27d) limités les uns par rapport aux autres, et **en ce que** les différentes zones de représentation (21, 22, 23, 24, 25, 26) peuvent être subdivisées en sous-lignes/sous-colonnes (26c, 26d) supplémentaires prévus pour afficher, le cas échéant, d'autres niveaux de menu avec des positions de représentation (28) séparées disposables dedans.

14. Installation selon une ou plusieurs revendications mentionnées précédemment 1 à 13, **caractérisée en ce qu'**en mode de fonctionnement normal de l'écran d'affichage central (1) en cas de renoncement à représenter en supplément des contenus d'information (50) liés au confort (radio, téléphone, etc.), toutes les zones de représentation (21, 22, 23, 24, 25, 26) de l'écran (1) peuvent être utilisées pour afficher des contenus d'information (20) s'affichant par défilement de manière autonome (symboles, avertissements, instructions, recommandations de manipulation ou messages similaires).

15. Installation selon une ou plusieurs revendications mentionnées précédemment 1 à 14, **caractérisée en ce qu'**au moyen de chaque contacteur de commande (3), il est possible de déclencher un affichage sur l'écran (1) et, le cas échéant, une fonction d'un appareil interne au véhicule (6, 7, 8, 9), auquel cas un contacteur de commande (35, 36, 37, 38, 39) défini est réservé à chaque fois pour la sélection et le déclenchement d'une fonction principale unique (menu principal) telle que, par exemple, « Fonctions du véhicule » (6), « Fonctions avancées de la radio » (7), « Fonction avancée du téléphone » (8), « Fonction de navigation » (9), « Système de climatisation », « Système de chauffage » et d'autres fonctions similaires de véhicule et de fonctions étrangères au véhicule, ainsi que d'autres contacteurs de commande (33, 34) sont réservés pour le déclenchement d'autres fonctions telles que, par exemple, « Sortie du menu » (touche de sortie) (33), « Sélection du niveau de menu » (touche de retour) (34), etc.

16. Installation selon une ou plusieurs revendications mentionnées précédemment 1 à 15, **caractérisée en ce que**, en plus de la possibilité d'appeler des fonctions principales (menu principal) des appareils (6, 7, 8, 9) internes au véhicule au moyen des régleurs de commande, d'autres appareils possédant une fonction proche, par exemple, d'autres lecteurs de CD, des changeurs de CD ou des lecteurs de cassettes en supplément de la radio (7) et, par exemple, d'autres fonctions comme un fax, etc. en supplément d'un téléphone (8), peuvent à chaque fois être appelés et commandés.

17. Installation selon une ou plusieurs revendications mentionnées précédemment 1 à 16, **caractérisée en ce qu'**en mode de fonctionnement spécial (mode menu, mode graphique, etc.) de l'écran d'affichage central (1), il est possible de recourir, en plus d'une deuxième zone de représentation (23) réservée pour cela, à d'autres zones de représentation (22, 24) complétant celle-ci pour afficher dans les menus principaux (« Fonction radio », « Fonction téléphone », « Fonction navigation », « Fonctions véhicule », « Fonctions de climatisation », « Fonctions de chauffage », etc.) des contenus d'information (50) consultables.

18. Installation selon une ou plusieurs revendications mentionnées précédemment 1 à 17, **caractérisée en ce que** le marquage de sélection (12) sur l'écran d'affichage central (1) est mis en valeur visuellement par une représentation inverse à l'environnement, en référence à lui ou en référence à son arrière-fond.

19. Installation selon une ou plusieurs revendications mentionnées précédemment 1 à 18, **caractérisé en ce qu'**en cas de survenance, le cas échéant, de conditions de véhicule modifiées (événements), un affichage de contenus d'information de priorité moins élevée sur l'écran (1), par exemple, des contenus d'information (50) liés au confort, peuvent être supplantés par un affichage de contenus d'information (20) spécifiques au véhicule et de priorité plus élevée (avertissements, instructions, etc.), et **en ce que** ces contenus d'information (20) peuvent être affichés, le cas échéant, en supplément et simultanément dans des voyants de contrôle avoisinant l'écran d'affichage central (1) dans le tableau de bord.

20. Installation selon une ou plusieurs revendications mentionnées précédemment 1 à 19, **caractérisé en ce que** l'affichage de contenus d'information (20) de priorité plus élevés (avertissements, instructions, etc.) sur l'écran d'affichage central (1) et, le cas échéant, dans des voyants de contrôle voisins à celui-ci peut être réalisé pendant une durée d'affichage plus élevée et/ou à l'aide de contraste de couleur plus frappant, et **en ce que** le degré de priorité de ces contenus d'information (20) affichés peut à chaque fois être affiché au moyen d'une symbolique de couleur spécifique.

21. Installation selon une ou plusieurs revendications mentionnées précédemment 1 à 20, **caractérisé en ce que** les contenus d'information de même priorité sur l'écran peuvent être affichés par intermittence de manière répétée (défilement continu).

22. Installation selon une ou plusieurs revendications mentionnées précédemment 1 à 21, **caractérisé en ce que** les contenus d'information (50) affichables en mode de fonctionnement spécial (mode menu, mode graphique, etc.) de l'écran (1) peuvent être sélectionnés si nécessaire au moyen du régleur de commande (4) rotatif et activable par pression et du marquage de sélection (12) sur l'écran, et peuvent être transmis au moins temporairement dans l'état d'un affichage de l'écran (affichage permanent) dans une zone de représentation (23) se trouvant en mode de fonctionnement normal de l'écran (1) par pression sur le régleur de commande (4).

23. Installation selon une ou plusieurs revendications mentionnées précédemment 1 à 22, **caractérisé en ce que** le nombre de contenus d'information (20, 50) possible affichable sur l'écran d'affichage central (1) est, le cas échéant, supérieur au nombre des emplacements de représentation existants dans l'espace total de représentation (40) de l'écran d'affichage central (1), auquel cas les contenus d'information (20, 50) se trouvant quasiment en position d'attente peuvent, le cas échéant, être appelés au moyen du dispositif de commande (2) et/ou affichés dans les différentes zones de représentation (21, 22, 23, 24, 25, 26) de l'écran d'affichage central (1) par défilement de manière autonome - le cas échéant par défilement synchronisé.

24. Installation selon une ou plusieurs revendications mentionnées précédemment 1 à 23, **caractérisé en ce qu'**en mode de fonctionnement normal et en mode menu de l'écran d'affichage central (1), de préférence l'ordinateur de l'écran (pilotage de l'affichage) spécifie l'aménagement graphique des contenus d'information (20, 50) affichables sur l'écran d'affichage central (1), et **en ce qu'**en mode graphique de l'écran d'affichage central (1), de préférence l'appareil (9) (système de navigation, système de climatisation, etc.) prévu le cas échéant ou son ordinateur cible (19) spécifie l'aménagement graphique des contenus d'information (20, 50) affichables sur l'écran d'affichage central (1), et **en ce que**, dans tous les modes de fonctionnement (mode normal, mode spécial) de l'écran d'affichage central (1), l'aménagement graphique des contenus d'information (20, 50) affichables sur l'écran d'affichage central (1) présente un caractère d'apparence uniformisé.

25. Installation selon une ou plusieurs revendications mentionnées précédemment 1 à 24, **caractérisé en ce que**, dans le cas du dispositif de commande (2), les contacteurs de commande (33, 34) prévus pour sélectionner les différents niveaux de menu sont disposés de préférence au-dessus du régleur de commande (4) et les contacteurs de commande (35, 36, 37, 38, 39) prévus pour la sélection des menus principaux (fonctions principales des appareils) sont disposés de préférence dans une zone à droite ou à gauche à proximité du régleur de commande (4) en colonne les uns au-dessus des autres, et **en ce que** le régleur de commande (4) ainsi que tous les contacteurs de commande (3) sont tous optimisés en termes d'ergonomie pour être atteints à la main sans que le chauffeur ne change de position et commandés de manière sûre.

26. Installation selon une ou plusieurs revendications mentionnées précédemment 1 à 25, **caractérisé en ce qu'**après le mode spécial (mode menu, mode graphique, etc.) de l'écran d'affichage central (1), un retour au mode normal de l'écran d'affichage central (1) peut être déclenché soit
a) par actionnement du contacteur de commande « Sortie du menu » (touche de sortie) (33), soit
b) de préférence de manière autonome par le non actionnement du régleur de commande (4) après un délai défini (saut temporel) - à l'exception du mode graphique avec le système de navigation (9) - soit
c) de manière autonome par refoulement de contenus d'information (50) affichés momentanément du mode spécial (mode menu, mode graphique, etc.) par le biais de contenus d'information (événements) (20) importants pour le véhicule affichés momentanément d'un degré de priorité le cas échéant plus élevé.

27. Installation selon une ou plusieurs revendications mentionnées précédemment 1 à 26, **caractérisé en ce qu'**après une interruption du mode spécial de l'écran (1) - à la suite de l'affichage momentané de contenus d'information (événements) (20) importants pour le véhicule - un rappel des réglages d'origine du menu à l'écran (1) ou des réglages de l'appareil est possible au moyen des contacteurs de commande (3) concernés du dispositif de commande (2) (fonction de reprise).
